# EUROPEAN PATENT SPECIFICATION

(11) **EP 2 235 124 B1**
(45) Date of publication and mention of the grant of the patent: **29.07.2015**
(21) Application number: 08866229.1
(22) Date of filing: 29.12.2008
(51) Int. Cl.: C09D 183/02, C09D 163/00

(54) **PROTECTIVE COATING COMPOSITIONS**
SCHUTZBESCHICHTUNGSZUSAMMENSETZUNGEN
COMPOSITIONS DE REVÊTEMENT PROTECTEUR

(30) Priority: 27.12.2007 US 16949 P; 11.03.2008 US 35578 P
(43) Date of publication of application: 06.10.2010
(73) Proprietor: 3M Innovative Properties Company, Saint Paul, MN 55133-3427 (US)
(72) Inventor: CHANG, Cheng-Chung, Saint Paul, Minnesota 55133-3427 (US); QIU, Zai-Ming, Saint Paul, Minnesota 55133-3427 (US)
(74) Representative: Vossius & Partner Patentanwälte Rechtsanwälte mbB
(86) International application number: PCT/US2008/088436
(87) International publication number: WO 2009/086515

(56) References cited:
- EP-A1- 1 083 205
- WO-A1-2004/056495
- WO-A1-2005/014742
- WO-A1-2008/131715
- WO-A1-2009/083564
- FR-A1- 2 886 309
- US-A- 596 256
- US-A- 5 178 959
- US-A1- 2007 254 166
- US-B1- 6 265 061

## Description

### FIELD

This invention relates to protective coatings compositions that are useful, for example, for protecting structural laminates and other hard surfaces. In particular, it relates to decorative laminates and to methods for making a decorative laminate.

### BACKGROUND

A common decorative device is to use a laminate having a decorative or other aesthetically desired appearance, as the top surface of furniture, flooring, and the like. Illustrative examples include PERGO™ Laminate Flooring and UNILIN™ Laminate Flooring. A typical construction includes, *inter alia,* a decorative layer overlaid with one or more "wear" or protective layers.

The flooring and furniture industries are continually searching for new ways for providing abrasion-resistant coatings to protect natural and man-made substrates by incorporating hard organic materials and inorganic particles into the protective layer. By doing so, they generally introduce undesirable light scattering or haze and hence reduce the clarity of the image or picture of the underlying decorative layer. Such haze and clarity reduction impairs the beauty and value of the substrates.

Decorative laminates often suffer from these disadvantages due to their high inorganic particle and paper fiber content, as well as the high refractive index of the polymers (for example, melamine polymers) in the wear layer. In addition, it can be difficult to provide easy-cleaning and anti-staining properties to decorative laminates. The use of fluorochemical compounds in protective overlayers has been suggested, but results have not been as good as desired, for example, because of the poor adhesion of many fluorochemical polymers to laminated melamine surfaces.

FR 2 886 309 relates to a sol for the sol-gel coating of a surface, said sol comprising specific amounts of a) at least one organometallic compound of zirconium, aluminium or titanium, b) of at least one organosilane compound, c) of at least one compound selected from acids, bases, glycols and ethoxyethanol, and d) the remainder to 100% of demineralized or distilled water.

WO 2005/014742 discloses a coating composition for an alkali-resistant, liquid-repellent layer comprising a) a condensation product of at least one hydrolysable silane having a fluorine-containing group and at least one hydrolysable silane having a cationically polymerizable group, and b) a cationic initiator.

WO 2004/056495 relates to a specific process for applying an anti-reflective coating system onto at least one surface of a lens made of polymer and to a method of making an anti-reflective coated eye lens.

EP 1 083 205 relates to a radiation curable silicone composition comprising (a) at least one specific alkoxylated resin-polymer organosilicone network and (b) a cationic photoinitiator.

### SUMMARY

We recognize that a need exists for improved protective coating compositions, particularly for use as protective overlay layers for decorative laminates. Such protective coatings should preferably exhibit a combination of properties including, for example, abrasion-resistance, stain- and soil-resistance, water- and soil-repellency, and high transmittance of decorative images on underlying layers.

Briefly, in one aspect, the present invention provides a decorative laminate which is either:
(a) a decorative laminate comprising:
   a decorative layer comprising melamine resin,
   a protective overlayer comprising a protective coating composition atop the decorative layer, wherein the protective coating composition comprises the reaction product of:
      (a) at least 50% by weight of a first component comprising one or more epoxy-terminated silane compounds,
      (b) a second component comprising one or more fluorochemical silane compounds, and
      (c) cationic photoinitiator;
         or
(b) a decorative laminate comprising:
   a decorative layer,
   a wear layer atop the decorative layer, wherein the wear layer comprises melamine resin, and
   a protective overlayer comprising a protective coating composition atop the wear layer, wherein the protective coating composition comprises the reaction product of:
      (a) at least 50% by weight of a first component comprising one or more epoxy-terminated silane compounds,
      (b) a second component comprising one or more fluorochemical silane compounds, and
      (c) cationic photoinitiator.

Moreover, the present invention provides the following methods for making a decorative laminate:

A method for making a decorative laminate comprising:
providing a decorative article comprising a decorative layer comprising melamine resin;
coating a protective coating composition on the decorative layer, wherein the protective coating composition comprises:
a first component comprising one or more epoxy-terminated silane compounds;
a second component comprising one or more fluorochemical silane compounds; and cationic photoinitiator;
wherein the first component comprises at least about 50% by weight of the composition; curing the protective coating composition using ultraviolet light; and laminating the decorative article using heat and pressure.

A method for making a decorative laminate comprising:
providing a decorative article comprising (i) a decorative layer and (ii) a wear layer comprising melamine resin atop the decorative layer;
coating a protective coating composition on the wear layer, wherein the protective coating composition comprises:
   a first component comprising one or more epoxy-terminated silane compounds;
   a second component comprising one or more fluorochemical silane compounds; and cationic photoinitiator;
   wherein the first component comprises at least about 50% by weight of the composition; curing the protective coating composition using ultraviolet light; and laminating the decorative article using heat and pressure. >

The protective coating compositions are suitable for use as protective layers over decorative underlayers in structural laminates (that is, laminates used for furniture, flooring, or wall surfaces). Photo-polymerized protective coatings can provide a substrate with antireflection characteristics which allows higher transmittance of the image or color of a decorative underlayer, as well as high abrasion resistance. In addition, the protective coating compositions can provide improved stain- and soil-resistance, and easy-cleaning properties. The coatings are therefore also beneficial for use on other hard substrates to impart these desirable properties.

The decorative laminates provided by the invention are suited for a variety of uses including, but not limited to, counter tops, wall panels, floor surfacing, tabletops, and the like. The protective overlayers offer heretofore unattained clarity and low blurring and reflection yielding pleasing clear views of the underlying decorative layer. In addition, the protective layers have low surface energy and are made of highly cross-linked abrasion-resistant materials. The combination of beneficial properties and the ease of manufacture make them well suited for a variety of applications.

### DETAILED DESCRIPTION

The protective coating compositions which are comprised in the decorative laminate of the present invention comprise the reaction product of (a) at least 50% by weight of a first component comprising one or more epoxy-terminated silane compounds, (b) a second component comprising one or more fluorochemical silane compounds, and (c) cationic photoinitiator. The compositions can be prepared by simply mixing together the components until they are thoroughly mixed.

### Epoxy-terminated Silanes

The protective coating compositions comprise epoxy-terminated silane compounds. Epoxy-terminated silanes are compounds or materials having polymerizable (preferably terminal) epoxy groups and terminal, polymerizable silane groups, the bridging of these groups being through a non-hydrolyzable aliphatic, aromatic, or aliphatic and aromatic divalent hydrocarbon linkage which may have N and/or O atoms in the linkage chain. The O atoms , for example, would be within the chain only as ether linkages. These linkage chains may be generally substituted as is well known in the art, as these substituents on the chain do not greatly affect the functional ability of the epoxy-terminated silanes to under the essential reactions necessary to polymerization through the siloxane or epoxy terminal groups. Examples of substituents which may be present on the linkage or bridging moieties are groups such as NO₂, CH₃(CH₂)ₙCH₂, methoxy, halogen, and the like. In general structural formulae appearing within this description of the invention, such substitution of the bridging moieties is implied unless specifically excluded by language such as "unsubstituted divalent hydrocarbon radical".

The epoxy-terminated silane compounds may be monomeric, oligomeric, or monomeric. They may be, for example, acrylates, urethanes, ester-based, or the like.

Examples of epoxy-terminated silanes useful in the present invention are described, for example, in U.S. Patent Nos. 4,049,861 and 4,293,606, and include compounds of the general formulae: 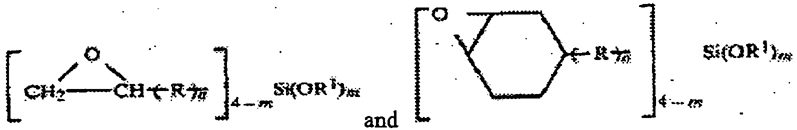 where R = a non-hydrolyzable divalent hydrocarbon radical (aliphatic, aromatic, or aliphatic and aromatic containing) of less than 20 carbon atoms or a divalent radical of less than 20 carbon atoms composed of C, H, N, S, and O atoms (these atoms are the only atoms which may appear in the backbone of the divalent radicals), the last being in the form of ether linkages. No two heteroatoms may be adjacent within the backbone of the divalent hydrocarbon radical. This description defines divalent hydrocarbon radicals for epoxy terminated siloxanes in the practice of this invention. The value of n is from 0 to 1, R' is an aliphatic hydrocarbon radical of less than 10 carbon atoms, an acyl radical of less than 10 carbon atoms, or a radical of formula (CH₂CH₂O)ₖ Z in which k is an integer of at least 1 and Z is an aliphatic hydrocarbon radical of less than 10 carbon atoms or hydrogen, m has values of 1 to 3.

The epoxy silanes used in this invention can be an epoxy silane of the above formula in which R is any divalent hydrocarbon radical such as methylene, ethylene, decalene, phenylene, cyclohexylene, cyclopentylene, methylcyclohexylene, 2-ethylbutylene, and allene or an ether radical such as -CH₂-CH₂-O-CH₂-CH₂-, (CH₂-CH₂O)₂-CH₂-CH₂-, 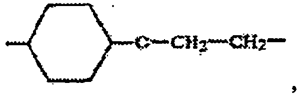 and CH₂O-(CH₂)₃-, R' can be any aliphatic hydrocarbon radical of less than 10 carbon atoms such as methyl, ethyl, isopropyl, butyl, vinyl, alkyl, or any acyl radical of less than 10 carbon atoms such as formyl, acetyl, propionyl, or any radical of the formula (CH₂CH₂O)ₖ Z in which k is an integer of at least 1, for example 2, 5, and 8, and Z is hydrogen or any aliphatic hydrocarbon radical of less than 10 carbon atoms such as methyl, ethyl, isopropyl, butyl, vinyl and allyl.

In addition to any of the above silanes, the epoxy-terminated silanes useful in the present invention can be any hydrolyzate or precondensate of the said silanes. These hydrolyzates can be formed by the partial or complete hydrolysis of the silane OR' groups. Thus the term precondensate includes siloxanes in which some or all of the silicon atoms are bonded through oxygen atoms. Prepolymers are formed by the polymerization of groups other than the silanes as in U.S. Patent No. 4,100,134.

The following compounds are illustrative of some of the epoxy-terminated silanes that are useful in the present invention:

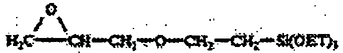

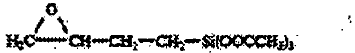

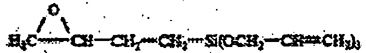

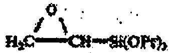

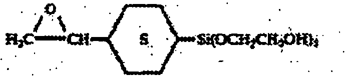

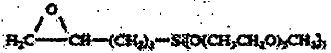

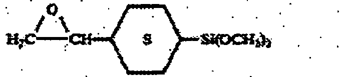

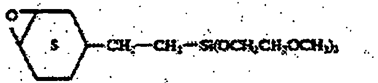

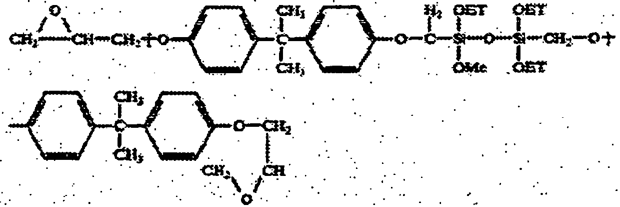

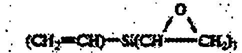

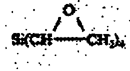

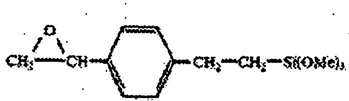

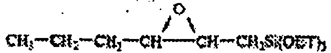

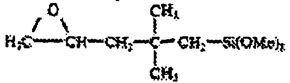

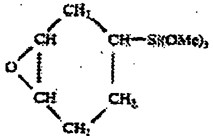

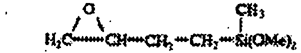

The preparation of most of the above epoxy-terminated silane compounds has been described in U.S. Patent No. 3,131,161.

Other useful epoxy-terminated silanes are those of the formula: 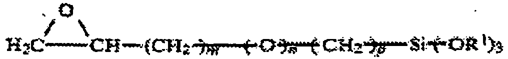 wherein
m is 1 to 6 (preferably 1 to 4),
n is 0 or 1 (preferably 1),
p is I to 6 (preferably 1 to 4), and
R¹ is H or alkyl of 1 to 10 carbon atoms (preferably alkyl of 1 to 4 carbon atoms).

Epoxy-terminated silanes typically comprise at least about 50% by weight of the protective coating compositions. Preferably, they comprise at least about 70% by weight of the composition.

### Fluorochemical Silanes

The protective coating compositions also comprise Fluorochemical silanes. The epoxy-terminated silanes described above and the fluorochemical silanes crosslink with themselves and with each other in the presence of acid generated by cationic photoinitiator, giving the protective coating compositions durability. In addition, the fluorochemical silane imparts stain- and soil- resistance, as well as easy-cleaning properties, to the protective coating compositions. It is believed that the fluorochemical groups tend to migrate to the surface of the coating composition prior to completing the cross-linking reaction. Many different fluorochemical silanes are useful in the protective coating compositions.

One class of fluorochemical silanes that is useful is fluorochemical polyether silane compounds having a polyfluoroether segment and at least one (preferably, two or more) hydrolysable silane groups per molecule. Such fluorochemical polyether silane compounds are described, for example, in WO 03/040247.

Such fluorochemical polyether silane compounds have a polyfluoropolyether segment and at least two silane groups -Si(Y)₃₋ₓ(R¹)ₓ per molecule, wherein R¹ represents an alkyl group (for example, a C1 - C8; preferably a C1 - C4 primary or secondary alkyl group), Y represents a hydrolysable group and x is O or 1. The term "hydrolysable group" in connection with fluorochemical polyether silane compounds refers to a group which either is directly capable of undergoing condensation reactions under appropriate conditions or which is capable of hydrolyzing under appropriate conditions, thereby yielding a compound, which is capable of undergoing condensation reactions.

Useful fluorochemical polyether silane compounds include, for example, those according to formula (I)

R_{f}[Q-C(R)₂-Si(Y)₃₋ₓ(R¹)ₓ]_{z} (I)

wherein R_{f} represents a multivalent polyfluoropolyether segment, Q represents an organic divalent linking group, R¹ represents an alkyl group (preferably containing 1 to 8; more preferably 1 to 4 carbon atoms), Y represents a hydrolysable group; R represents hydrogen or an alkyl group of 1 to 4 carbon atoms and the R groups may be the same or different, x is 0 or 1 and z is 2, 3 or 4. Preferably both R groups are hydrogens.

R_{f} preferably is a perfluorinated group (that is, all C-H bonds are replaced by C-F bonds). More preferably, it includes perfluorinated repeating units selected from the group of -(CₙF₂ₙO)-, -(CF(Z)O)-, -(CF(Z)CₙF₂ₙO)-, -(CₙF₂ₙCF(Z)O)-, -(CF₂CF(Z)O)-, and combinations thereof, wherein the repeating units generally may be randomly, blocky or alternating arranged, and optionally can include -(CₙF2ₙ)- and -(CF(Z))- units and wherein n in a number from 1 to 12 inclusive, preferably from 1 to 4 inclusive. R_{f} may also comprise cyclic perfluoro groups, for example cyclic -C₆F₁₀- groups.

In these repeating units Z is a perfluoroalkyl group, an oxygen- containing perfluoroalkyl group, a perfluoroalkoxy group, or an oxygen- substituted perfluoroalkoxy group, all of which can be linear, branched, or cyclic, and preferably have about 1 to about 9 carbon atoms and 0 to about 4 oxygen atoms. Examples of polyfluoropolyethers containing polymeric moieties made of these repeating units are disclosed in U.S. Patent. No. 5,306,758 (Pellerite).

Suitable linking groups Q include the following structures in addition to a covalent bond. For the purposes of this list, each k is independently an integer from O to about 20, k' is independently an integer from O to 20, preferably from 2 to 12 and most preferably 0 from 2 to 6, R_{1'} is hydrogen,phenyl, or alkyl of 1 to about 4 carbon atoms, and R_{2'} is alkyl of 1 to about 20 carbon atoms

| | |
|---|---|
| -SO₂NR₁'(CH₂)ₖO(O)C- | -CONR₁'(CH₂)ₖO(O)C- |
| -(CH₂)ₖO(O)C- | -CH₂CH(OR₂')CH₂O(O)C- |
| -(CH₂)ₖC(O)O(CH₂)_{k'}- | -(CH₂)ₖSC(O)- |
| -(CH₂)ₖO(CH₂)ₖO(O)C- | -(CH₂)ₖS(CH₂)ₖO(O)C- |
| -(CH₂)ₖSO₂(CH₂)ₖO(O)C- | -(CH₂)ₖS(CH₂)ₖOC(O)- |
| -(CH₂)ₖSO₂NR₁'(CH₂)ₖO(O)C- | -(CH₂)ₖSO₂- |
| -SO₂NR₁'(CH₂)ₖO(CH₂)_{k'}- | -SO₂NR₁'(CH₂)ₖ- |
| -(CH₂)ₖO(CH₂)ₖC(O)O(CH₂)_{k'}- | -(CH₂)ₖSO₂NR₁'(CH₂)ₖC(O)O(CH₂)_{k'}- |
| -(CH₂)ₖSO₂(CH₂)ₖC(O)O(CH₂)_{k'}- | -CONR₁'(CH₂)ₖC(O)O(CH₂)_{k'}- |
| -(CH₂)ₖS(CH₂)ₖC(O)OCH₂)_{k'}- | -CH₂CH(OR₂')CH₂C(O)O(CH₂)_{k'}- |
| -SO₂NR₁'(CH₂)ₖC(O)O(CH₂)_{k'}- | -(CH₂)ₖO(CH₂)_{k'}- |
| -OC(O)NR'(CH₂)ₖ- | -(CH₂)ₖNR₁'- |
| -CₖH₂ₖ-OC(O)NH- | -CₖH₂ₖ-NR₁'C(O)NH(CH₂)_{k'}-, |
| -(CH₂)ₖNR₁'C(O)O(CH₂)_{k'}-, and | -(CH₂)ₖ- |

Preferred linking groups Q are -C(O)NH(CH₂)₂- and -OC(O)NH(CH₂)₂-.

Preferred hydrolysable groups include C1 - C4 alkoxy groups, such as methoxy and ethoxy groups.

Examples of preferred fluorinated disilanes include, but are not limited to, the following approximate average structures:
(R¹)ₓ (Y)₃₋ₓ Si-CR₂-QCF₂O(CF₂O)ₘ(C₂F₄O)ₚCF₂Q-CR₂-Si(Y)₃₋ₓ(R¹)ₓ,
(R¹)ₓ (Y)₃₋ₓ Si-CR₂-Q CF(CF₃)O[CF₂CF(CF₃)]ₘ(CF₂)ₚO[CF(CF₃)CF₂O]ₙCF(CH₃)Q-CR₂-Si(Y)₃₋ₓ(R¹)ₓ
(R¹)ₓ (Y)₃₋ₓ Si-CR₂-Q CF₂O(C₂F₄O)ₚCF₂ Q-CR₂-Si(Y)₃₋ₓ(R¹)ₓ, and
(R¹)ₓ (Y)₃₋ₓ Si-CR₂-Q (CF₂)₃O(C₄F₈O)ₚ(CF₂)₃ Q-CR₂-Si(Y)₃₋ₓ(R¹)ₓ.

Preferably, in each fluorinated polyether silane, Q contains a nitrogen atom. More preferably, at least one Q-CR₂-Si(Y)₃₋ₓ(R¹)ₓ group per molecule is C(O)NH(CH₂)₃Si(OR)₃ or OC(O)NH(CH₂)₃Si(OR)₃ (wherein R is methyl, ethyl, polyethyleneoxy or mixtures thereof).

More useful fluorochemical silanes are disclosed in U.S. Patent No. 6,646,088 (Fan et al.). These compounds are fluorochemical urethane compounds comprising the reaction product of (a) one or more polyfunctional isocyanate compounds; (b) optionally one or more hydrophilic polyoxyalkylene compounds; (c) one or more fluorochemical monofunctional compounds; and (d) one or more silane compounds.

Some silanes are of the following formula:

X-R¹-Si-(Y)₃ (II)

wherein:
X is -NH₂; -SH; -OH; -N=C=O; or -NRH where R is a phenyl, straight or branched aliphatic, alicyclic, or a aliphatic ester group;
R¹ is an alkylene, heteroalkylene, aralkylene, or heteroaralkylene group; and
each Y is independently a hydroxyl; a hydrolyzable moiety selected from the group consisting of alkoxy, acyloxy, heteroalkyoxy, heteroacyloxxy, halo, and oxime; or a non-hydrolyzable moiety selected from the group consisting of phenyl, alicyclic, straight-chain aliphatic, and branched-chain aliphatic, wherein at least one Y is a hydrolyzable moiety.

Each fluorochemical urethane compound comprises a urethane group that is derived or derivable from the reaction of at least one polyfunctional isocyanate compound and at least one hydrophilic polyoxyalkylene compound. The fluorochemical urethane compound is terminated, on average, with (i) one or more perfluoroalkyl groups, one or more perfluoroheteroalkyl groups; and (ii) one or more silyl groups. It will be understood that the reaction product will provide a mixture of compounds, some percentage of which will comprise compounds as described, but may further comprise urethane compounds having different substitution patterns and degree of substitution.

Preferred classes of urethane compounds that may be present are represented by the following formulas:
R_{f} ZR² -X'(-CONH-Q(A) ₘ-NHCO-X'R³ X'-)ₙCONH-Q(A)-NHCO-X'R¹Si(Y)₃
R_{f}ZR² -X'(-CONH-Q(A) ₘ-NHCO-X'R³X'-)ₙCONHR¹Si(Y)₃
   wherein:
   R_{f}ZR² - is a residue of at least one of the fluorochemical monofunctional compounds;
   R_{f} is a perfluoroalkyl group having 2 to about 12 carbon atoms, or a perfluoroheteroalkyl group having 3 to about 50 carbon atoms;
   Z is a covalent bond, sulfonamido (-SO₂NR-), or carboxamido (-CONR-) where R is hydrogen or alkyl;
   R¹ is an alkylene, heteroalkylene, aralkylene, or heteroaralkylene group;
   R² is a divalent straight or branched chain alkylene, cycloalkylene, or heteroalkylene group of 1 to 14 carbon atoms, preferably 1 to 8 carbon atoms, more preferably 1 to 4 carbon atoms, and most preferably two carbon atoms, and preferably R² is alkylene or heteroalkylene of 1 to 14 carbon atoms;
   Q is a multi-valent organic group that is a residue of the polyfunctional isocyanate compound;
   R³ is a polyvalent, preferably divalent organic group which is a residue of the hydrophilic polyoxyalkylene;
   X' is -O-, -S-, or -N(R)-, wherein R is hydrogen or C₁ -C₄ alkyl;
   each Y is independently a hydroxy; a hydrolyzable moiety selected from the group consisting of alkoxy, acyloxy, heteroalkoxy, heteroacyloxy, halo, and oxime; or a non-hydrolyzable moiety selected from the group consisting of phenyl, alicyclic, straight-chain aliphatic, and branched-chain aliphatic, wherein at least one Y is a hydrolyzable moiety;
   A is selected from the group consisting of R_{f}ZR²-OCONH-, (Y)₃SiR¹XCONH-, and (Y)₃SiR¹NHCOOR³OCONH-;
   m is an integer from 0 to 2; and
   n is an integer from 1 to 10.

It will be understood with respect to the above formulas that the compounds represent theoretical structures for the reaction products. The reaction product will contain a mixture of compounds in which the substitution patterns of the isocyanate groups will vary.

Polyfunctional isocyanate compounds useful in the present invention comprise isocyanate groups attached to the multivalent organic group, Q, which can comprise a multivalent aliphatic, alicyclic, or aromatic moiety; or a multivalent aliphatic, alicyclic or aromatic moiety attached to a blocked isocyanate, a biuret, an isocyanurate, or a uretdione, or mixtures thereof. Preferred polyfunctional isocyanate compounds contain at least two and preferably three or more -NCO groups. Compounds containing two -NCO groups are comprised of divalent aliphatic, alicyclic, araliphatic, or aromatic moieties to which the -NCO radicals are attached. Preferred compounds containing three -NCO radicals are comprised of isocyanatoaliphatic, isocyanatoalicyclic, or isocyanatoaromatic, monovalent moieties, which are attached to a biuret or an isocyanurate.

Preferred polyisocyanates, in general, include those selected from the group consisting of hexamethylene 1,6-diisocyanate (HDI), 1,12-dodecane diisocyanate isophorone diisocyanate, toluene diisocyanate, dicyclohexylmethane 4,4'-diisocyanate, MDI, derivatives of all the aforementioned, including Desmodur™ N-100, N-3200, N-3300, N-3400, N-3600, and mixtures thereof.

Polyols suitable include those organic polyols that have an average hydroxyl functionality of at least about 2 (preferably, about 2 to 5; more preferably, about 2 to 3; most preferably, about 2, as diols are most preferred). The hydroxyl groups can be primary or secondary, with primary hydroxyl groups being preferred for their greater reactivity. Mixtures of diols with polyols that have an average hydroxyl functionality of about 2.5 to 5 (preferably about 3 to 4; more preferably, about 3) can also be used. It is preferred that such mixtures contain no more than about 20 percent by weight of such polyols, more preferably no more than about 10 percent, and most preferably no more than about 5 percent. Preferred mixtures are mixtures of diols and triols.

Suitable polyols include those that comprise at least one aliphatic, heteroaliphatic, alicyclic, heteroalicyclic, aromatic, heteroaromatic, or polymeric moiety. Preferred polyols are aliphatic or polymeric polyols that contain hydroxyl groups as terminal groups or as groups that are pendant from the backbone chain of the polyol.

Preferred polyols include 2,2-bis(hydroxymethyl)propionic acid; N,N-bis(2-hydroxyethyl)-3-aminopropyltriethoxysilane; bicine; 3,5-dihydroxybenzoic acid; 2,4-dihydroxybenzoic acid; N-bis(2-hydroxyethyl)perfluorobutyl sulfonamide; 1,2-ethanediol; 1,2- and 1,3-propanediol; 1,3- and 1,4-butanediol; neopentylglycol; 1,5-pentanediol; 3-methyl-1,5-pentanediol; 1,2-, 1,5-, and 1,6-hexanediol; bis(hydroxymethyl)cyclohexane; 1,8-octanediol; 1,10-decanediol; di(ethylene glycol); tri(ethylene glycol); tetra(ethylene glycol); di(propylene glycol); di(isopropylene glycol); tri(propylene glycol); poly(ethylene glycol) diols (number average molecular weight of about 200 to about 1500); poly(di(ethylene glycol) phthalate) diol (having number average molecular weights of, for example, about 350 or about 575); poly(propylene glycols) diols (number average molecular weight of about 200 to about 500); block copolymers of poly(ethylene glycol) and poly(propylene glycol) such as PLURONIC.TM. L31 (available from BASF Corporation, Mount Olive, N.J.); polydimethylsiloxane diol; fluorinated oxetane polyols made by the ring-opening polymerization of fluorinated oxetane such as POLY-3-FOX.TM. (available from Omnova Solutions, Inc., Akron, Ohio); polyetheralcohols prepared by ring opening addition polymerization of a fluorinated organic group substituted epoxide with a compound containing at least two hydroxyl groups as described in U.S. Pat. No. 4,508,916 (Newell et al); perfluoropolyether diols such as FOMBLIN.TM. ZDOL (HOCH₂CF₂O(CF₂O)₈₋₁₂(CF₂CF₂O)₈₋₁₂CF₂CH₂OH, available from Ausimont, Inc., Thorofare, N.J.); 1,4-bis(1-hydroxy-1,1-dihydroperfluoroethoxyethoxy)perfluoro-n-butane (HOCH₂CF₂OC₂F₄O(CF₂)₄OC₂F₄OCF₂CH₂OH); 1,4-bis (1-hydroxy-1,1-dihydroperfluoropropoxy)perfluoro-n-butane (HOCH₂CF₂CF₂O(CF₂)₄OCF₂CF₂CH₂OH); polycaprolactone diols (number average molecular weight of about 200 to about 600); resorcinol; hydroquinone; 1,6-, 2,5-, 2,6-, and 2,7-dihydroxynaphthalene; 4,4'-biphenol; bisphenol A; bis(4-hydroxyphenyl)methane; and the like; and mixtures thereof.

More preferred polyols include bis(hydroxymethyl)propionic acid; bicine; N-bis(2-hydroxyethyl)perfluorobutylsulfonamide; 1,2-ethanediol; 1,2- and 1,3-propanediol; 1,4-butanediol; neopentylglycol; 1,2- and 1,6-hexanediol; di(ethylene glycol); tri(ethylene glycol); 1,4-bis(1-hydroxy-1,1-dihydroperfluoropropoxy)perfluoro-n-butane (HOCH₂CF₂CF₂O(CF₂)₄OCF₂CF₂CH₂OH); fluorinated oxetane polyols made by the ring-opening polymerization of fluorinated oxetane such as POLY-3-FOX.TM. (available from Omnova Solutions, Inc., Akron Ohio); poly(di(ethylene glycol) phthalate) diol (having number average molecular weights of, for example, about 350 or about 575); poly(ethylene glycol) diols (having number average molecular weights of, for example, about 200, 300, 400); polydimethylsiloxane diol; polypropylene glycol (having a number average molecular weight of, for example, about 425); dimer diol; polycaprolactone diol (having a number average molecular weight of, for example, about 530); 3,5-dihydroxybenzene; bisphenol A; resorcinol; hydroquinone; and mixtures thereof.

Suitable fluorochemical monofunctional compounds include those that comprise at least one R_{f} group. The R_{f} groups can contain straight chain, branched chain, or cyclic fluorinated alkylene groups or any combination thereof. The R_{f} groups can optionally contain one or more heteroatoms (that is oxygen, sulfur, and/or nitrogen) in the carbon-carbon chain so as to form a carbon-heteroatom-carbon chain (that is a heteroalkylene group). Fully-fluorinated groups are generally preferred, but hydrogen or chlorine atoms can also be present as substituents, provided that no-more than one atom of either is present for every two carbon atoms. It is additionally preferred that any R _{f} group contain at least about 40% fluorine by weight, more preferably at least about 50% fluorine by weight. The terminal portion of the group is generally fully-fluorinated, preferably containing at least three fluorine atoms, for example, CF₃O-, CF₃CF₂-, CF₃CF₂CF₂-, (CF₃)₂N-, (CF₃)₂CF-, SF₅CF₂₋. Perfluorinated aliphatic groups (that is, those of the formula CₙF₂ₙ₊₁-) wherein n is 2 to 12 inclusive are the preferred R_{f} groups, with n = 3 to 5 being more preferred and with n = 4 being the most preferred.

Useful fluorochemical monofunctional compounds include compounds of the following formula:

R_{f}-Z-R²-X

wherein:
R_{f} is a perfluoroalkyl group or a perfluoroheteroalkyl group as defined above;
Z is a connecting group selected from a covalent bond, a sulfonamido group, a carboxamido group, a carboxyl group, or a sulfonyl group; and
R² is a divalent straight or branched chain alkylene, cycloalkylene, or heteroalkylene group of 1 to 14 carbon atoms, preferably 1 to 8 carbon atoms, more preferably 1 to 4 carbon atoms, and most preferably two carbon atoms, and
X is an isocyanate-reactive functional group, for example -NH₂; -SH; -OH; -N=C=O; or -NRH where R is H or a C₁ -C₄ alkyl.

Suitable silane compounds include those of the following formula:

X-R¹-Si-(Y)₃.

wherein X, R¹, and Y are as defined previously. Therefore, these silane compounds contain one, two, or three hydrolysable groups (Y) on the silicon and one organic group including an isocyanate-reactive or an active hydrogen reactive radical (X-R¹). Any of the conventional hydrolysable groups, such as those selected from the group consisting of alkoxy, acyloxy, heteroalkoxy, heteroacyloxy, halo, oxime, and the like, can be used as the hydrolyzable group (Y). The hydrolysable group (Y) is preferably alkoxy or acyloxy and more preferably alkoxy.

When Y is halo, the hydrogen halide liberated from the halogen-containing silane can cause polymer degradation when cellulose substrates are used. When Y is an oxime group, lower oxime groups of the formula -N=CR⁵R⁶, wherein R⁵ and R⁶ are monovalent lower alkyl groups comprising about 1 to about 12 carbon atoms, which can be the same or different, preferably selected from the group consisting of methyl, ethyl, propyl, and butyl, are preferred.

Representative divalent bridging radicals (R₁) include, but are not limited to, those selected from the group consisting of -CH₂CH₂-, -CH₂CH₂CH₂-,-CH₂CH₂CH₂OCH₂CH₂-, -CH₂CH₂C₆H₄CH₂CH₂-, and - CH₂CH₂O(C₂H₄O)₂CH₂CH₂N(CH₃)CH₂CH₂CH₂-.

Other preferred silane compounds are those which contain one or two hydrolyzable groups, such as those having the structures R²OSi(R⁷)₂R¹XH and (R⁸O)₂Si(R⁷)R¹XH, wherein R¹ is as previously defined, and R⁷ and R⁸ are selected from the group consisting of a phenyl group, an alicycylic group, or a straight or branched aliphatic group having from about 1 to about 12 carbon atoms. Preferably, R⁷ and R⁸ are a lower alkyl group comprising 1 to 4 carbon atoms.

Useful fluorochemical silanes are also disclosed in U.S. Patent No. 7,166,329 (Dams). These fluorochemical oligomeric silanes can be represented by the general formula:

X-M^{f}ₙM^{h}ₘM^{a}ᵣ-G (III)

wherein
X represents the residue of an initiator or hydrogen;
M^{f} represents units derived from fluorinated monomers having the formula:

C₄F₉-Q²-E¹

wherein
E¹ represents a free radical polymerizable group and Q² represents an organic divalent linking group;
M^{h} represents units derived from non-fluorinated monomers;
M^{a} represents units having a silyl group represented by the formula: 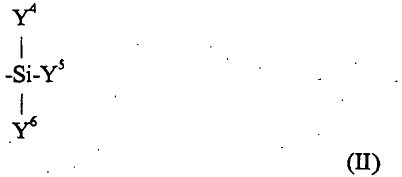 wherein
each of Y⁴, Y⁵ and Y⁶ independently represents an alkyl group, an aryl group or a hydrolyzable group, with the proviso that at least one of Y⁴, Y⁵ and Y⁶ represents a hydrolyzable group;
G represents a monovalent organic group comprising the residue of a chain transfer agent;
n represents an integer of 1 to 100;
m represents an integer of 0 to 100;
r represents an integer of 0 to 100; and
n+m+r is at least 2;
with the proviso that at least one of the following conditions is fulfilled: (a) G is a monovalent organic group that contains a silyl group of the formula: 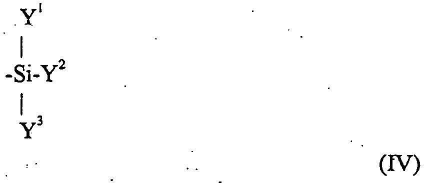 wherein Y¹, Y² and Y³ each independently represents an alkyl group, an aryl group or a hydrolyzable group with at least one of Y¹, Y² and Y³ representing a hydrolyzable group or (b) r is at least 1 and at least one of Y⁴, Y⁵ and Y⁶ represents a hydrolyzable group.

U.S. Patent No. 7,166,329 also discloses fluorochemical oligomers having the formula:

X-M^{f}ₙM^{h}ₘM^{a}ᵣ-G (V)

wherein
X represents the residue of an initiator or hydrogen;
M^{f} represents units derived from fluorinated monomers;
M^{h} represents units derived from non-fluorinated monomers;
M^{a} represents units having the formula: 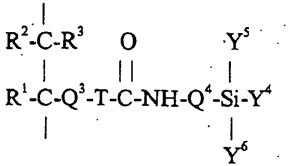 wherein R¹, R² and R³ each independently represents hydrogen, an alkyl group, an aryl group or halogen, Q³ represents an organic divalent linking group, T represents O or NR with R being hydrogen, an aryl or a C₁-C₄ alkyl group, and wherein each of Y⁴, Y⁵ and Y⁶ independently represents an alkyl group, an aryl group or a hydrolyzable group, with the proviso that at least one of Y⁴, Y⁵ and Y⁶ represents a hydrolyzable group;
G represents a monovalent organic group comprising the residue of a chain transfer agent; n represents an integer of 1 to 100;
m represents an integer of 0 to 100;
r represents an integer of 1 to 100; and
n+m+r is at least 2.

In addition, U.S. Patent No. 7,166,329 also provides a fluorochemical oligomer having the formula:

X-M^{f}ₙM^{h}ₘM^{a}ᵣ-G (VI)

wherein
X represents the residue of an initiator or hydrogen;
M^{f} represents units derived from fluorinated monomers;
M^{h} represents units derived from a non-fluorinated monomers;
M^{a} represents units having a silyl group represented by the formula: 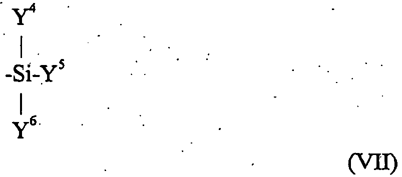 wherein each of Y⁴, Y⁵ and Y⁶ independently represents an alkyl group, an aryl group or a hydrolyzable group, with the proviso that at least one of Y⁴, Y⁵ and Y⁶ represents a hydrolyzable group;

G corresponds to the formula: 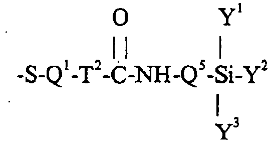 wherein Q¹ and Q⁵ each independently represents an organic divalent linking group, T² represents O orNR with R being hydrogen, an aryl or a C₁-C₄ alkyl group, and Y¹, Y² and Y³ each independently represents an alkyl group, an aryl group or a hydrolyzable group with at least one of Y¹, Y² and Y³ representing a hydrolyzable group;
n represents an integer of 1 to 100;
m represents an integer of 0 to 100;
r represents an integer of 0 to 100; and
n+m+r is at least 2.

The units M^{f} of the fluorochemical silane are generally derived from fluorochemical monomers corresponding to the formula:

R_{f}-Q-E¹ (VIII)

wherein R_{f} represents a fluoroaliphatic group containing at least 3 carbon atoms or a fluorinated polyether group. Q represents an organic divalent linking group and E¹ represents a free radical polymerizable group.

The fluoroaliphatic group R_{f}, in the fluorochemical monomer, is a fluorinated, stable, inert, preferably saturated, non-polar, monovalent aliphatic radical. It can be straight chain, branched chain, or cyclic or combinations thereof. It can contain heteroatoms such as oxygen, divalent or hexavalent sulfur, or nitrogen. R_{f} is preferably a fully-fluorinated radical, but hydrogen or chlorine atoms can be present as substituents if not more than one atom of either is present for every two carbon atoms. The R_{f} radical has at least 3 and up to 18 carbon atoms, preferably 3 to 14, especially 4 to 10 carbon atoms, and preferably contains about 40% to about 80% fluorine by weight, more preferably about 50% to about 79 % fluorine by weight. The terminal portion of the R_{f} radical is a perfluorinated moiety, which will preferably contain at least 7 fluorine atoms, for example, CF₃CF₂CF₂-, (CF₃)₂CF-, F₅SCF₂-. The preferred R_{f} radicals are fully or substantially fluorinated and are preferably those perfluorinated aliphatic radicals of the formula CₙF₂ₙ₊₁- where n is 3 to 18, particularly 4 to 10.

The R_{f} group can also be a perfluoropolyether group. The perfluoropolyether group R_{f} can include linear, branched, and/or cyclic structures, that may be saturated or unsaturated, and substituted with one or more oxygen atoms. It is preferably a perfluorinated group (that is, all C-H bonds are replaced by C-F bonds). More preferably, it includes perfluorinated repeating units selected from the group of -(CₙF₂ₙ)-, -(CₙF₂ₙO)-, -(CF(Z))-, -(CF(Z)O)-, -(CF(Z)CₙF₂ₙO)-, -(CₙF₂ₙCF(Z)O)-, -(CF₂CF(Z)O)-, and combinations thereof. In these repeating units Z is a perfluoroalkyl group, an oxygen-substituted perfluoroalkyl group, a perfluoroalkoxy group, or an oxygen-substituted perfluoroalkoxy group, all of which can be linear, branched, or cyclic, and preferably have about 1 to about 9 carbon atoms and 0 to about 4 oxygen atoms. The terminal groups can be (CₙF₂ₙ₊₁)-, (CₙF₂ₙ₊₁O)- or (X'CₙF₂ₙO)-, wherein X' is H, Cl, or Br, for example. Preferably, these terminal groups are perfluorinated. In these repeating units or terminal groups, n is 1 or more, and preferably about 1 to about 4. Particularly preferred approximate average structures for a perfluoropolyether group include C₃F₇O(CF(CF₃)CF₂O)ₚCF(CF₃)- and CF₃O(C₂F₄O)ₚCF₂- wherein an average value for p is 1 to about 50. As synthesized, these compounds typically include a mixture of polymers. The approximate average structure is the approximate average of the mixture of polymers.

M^{f} in formula VII can also be derived from a difunctional fluorochemical monomer corresponding to the formula:

E^{a}-Q^{a}-R¹_{f}-Q^{b}-E^{b} (IX)

wherein Q^{a} and Q^{b} each independently represents an organic divalent linking group and E^{a} and E^{b} each independently represent a free radical polymerizable group. R¹_{f} represents a divalent perfluoropolyether group such as -(CF(CF₃)CF₂O)ₚ-, -(CF₂O)ₚ(CF₂CF₂O)_{q}-, -CF(CF₃)(CF₂CF(CF₃)O)ₚCF(CF₃)O-, -(CF₂O)ₚ(CF₂CF₂O)_{q}CF₂-, -(CF₂CF₂O)ₚ-, -(CF₂CF₂CF₂O)ₚ-, wherein an average value for p and q is 1 to about 50. The molecular weight of the difunctional fluorochemical monomer should generally be between about 200 and 3000, more preferably between 300 and 2500. The amount of difunctional fluorochemical monomer used should be chosen so as to obtain a composition which is soluble or dispersible in an organic solvent in an amount of at least 0.05% by weight.

The linking groups Q, Q^{a} and Q^{b} in the above formulas (VIII) and (IX) link the fluoroaliphatic or the fluorinated polyether group R_{f} or R¹_{f} to the free radical polymerizable group E¹, E^{a} or E^{b} and are generally non-fluorinated organic linking groups. The linking groups preferably contain from 1 to about 20 carbon atoms and may optionally contain oxygen, nitrogen, or sulfur-containing groups or a combination thereof. The linking groups are preferably free of functional groups that substantially interfere with free-radical oligomerization (for example, polymerizable olefinic double bonds, thiols, and other such functionality known to those skilled in the art). Examples of suitable linking groups Q include straight chain, branched chain or cyclic alkylene, arylene, aralkylene, oxy, oxo, hydroxy, thio, sulfonyl, sulfoxy, amino, imino, sulfonamido, carboxyamido, carbonyloxy, urethanylene, ureylene, and combinations thereof such as sulfonamidoalkylene. Preferred linking groups are selected from the group consisting of alkylene and an organic divalent linking group according to the following formulae: 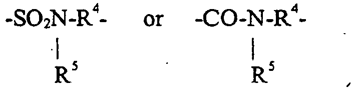 wherein R⁴ represents a hydrogen or a linear or branched alkylene having 2 to 4 carbon atoms and R⁵ represents a hydrogen or an alkyl having 1 to 4 carbon atoms. E¹, E^{a} and E^{b} are free radically polymerizable groups that typically contain an ethylenically unsaturated group capable of undergoing a free radical polymerization. Suitable groups include, for example, moieties derived from vinyl ethers, vinyl esters, allyl esters, vinyl ketones, styrene, vinyl amide, acrylamides, maleates, fumarates, acrylates and methacrylates. Of these, the esters of alpha, beta unsaturated acids, such as the acrylates and methacrylates are preferred.

Preferred examples of fluorochemical monomers include:

CF₃(CF₂)₃CH₂OCOC(CH₃)=CH₂

CF₃(CF₂)₃CH₂OCOCH=CH₂

CF₃(CF₂)₇(CH₂)₂OCOCH=CH₂

CF₃(CF₂)₇(CH₂)₂OCOC(CH₃)=CH₂

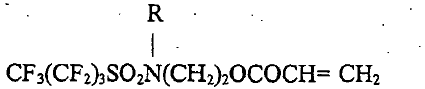

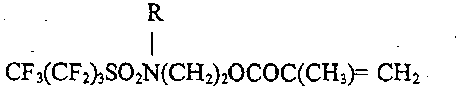

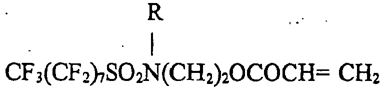

CF₃CF₂(CF₂CF₂)₂₋₈CH₂CH₂OCOCH=CH₂

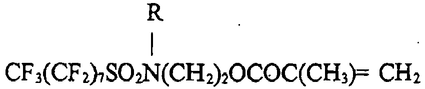

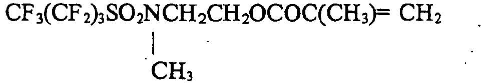

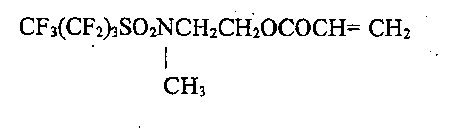

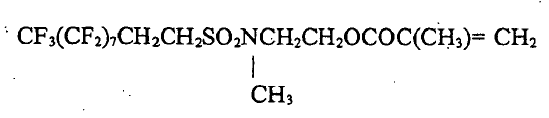

CF₃O(CF₂CF₂)ᵤCH₂OCOCH=CH₂

CF₃O(CF₂CF₂)ᵤCH₂OCOC(CH₃)=CH₂

C₃F₇O(CF(CF₃)CF₂O)ᵤCF(CF₃)CH₂OCOCH=CH₂

C₃F₇O(CF(CF₃)CF₂O)ᵤCF(CF₃)CH₂OCOC(CH₃)=CH₂

CH₂=CH-OCOCH₂CF₂(OCF₂)ᵤ(OCF₂CF₂)ᵥOCF₂CH₂OCOCH=CH₂

CH₂-C(CH₃)-OCOCH₂CF₂(OCF₂)ᵤ(OCF₂CF₂)ᵥOCF₂CH₂OCOC(CH₃)=CH₂

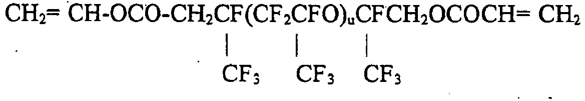

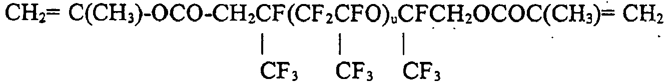

wherein R represents methyl, ethyl or n-butyl and u and v are about 1 to 50.

The units M^{h} of the fluorochemical silane (when present) are generally derived from a non-fluorinated monomer, preferably a monomer consisting of a polymerizable group and a hydrocarbon moiety. Hydrocarbon group containing monomers are well known and generally commercially available. Useful hydrocarbon containing monomers include those according to formula:

R^{h}-Q⁶ₛ-E³ (X)

wherein R^{h} represents a hydrocarbon group, Q⁶ is a divalent linking group, s is 0 or 1 and E³ is a free radical polymerizable group. Examples of linking groups Q⁶ include oxy, carbonyl, carbonyloxy, carbonamido, sulphonamido, oxyalkylene and poly(oxyalkylene).

The Fluorochemical silanes generally further includes units M^{a} that have a silyl group that has one or more hydrolysable groups. Examples of units M^{a} include those that correspond to the general formula: 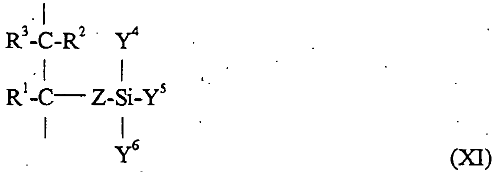 wherein R¹, R² and R³ each independently represents hydrogen, an alkyl group such as for example methyl or ethyl, halogen or an aryl group, Z represents an organic divalent linking group and Y⁴, Y⁵ and Y⁶ independently represents an alkyl group, an aryl group, or a hydrolysable group.

Still more useful fluorochemical silanes are disclosed in U.S. Patent Application Pub. No. 2004/0147188. These fluorochemical urethane compounds comprise the reaction product of (a) one or more polyfunctional isocyanate compounds; (b) one or more fluorochemical monofunctional compounds; (c) one or more silane compounds and optionally (d) one or more hydrophilic polyoxyalkylene compounds.

Each fluorochemical urethane compound comprises a urethane group that is derived or derivable from the reaction of at least one polyfunctional isocyanate compound and at least one fluorochemical monofunctional compound. The fluorochemical urethane compound is terminated, on average, with (a) one or more perfluoroalkyl groups, (b) one or more perfluoroheteroalkyl groups; (c) one or more silyl groups and optionally (d) one or more hydrophilic polyoxyalkylene groups. It will be understood that the reaction product will provide a mixture of compounds, some percentage of which will comprise compounds as described, but may further comprise urethane compounds having different substitution patterns and degree of substitution.

Generally, the amount of said fluorochemical monofunctional compounds is sufficient to react with between 60 and 95 % of available isocyanate groups, and if present, the amount of said hydrophilic polyoxyalkylene compound is sufficient to react with between 0.1 and 30 % of available isocyanate groups, and the amount of said silanes is sufficient to react with between 0.1 and 25 % of available isocyanate groups. Preferably, the amount of said hydrophilic polyoxyalkylene(s) is sufficient to react with between 0.5 and 30 % of available isocyanate groups, the amount of said silanes is sufficient to react with between 0.1 and 15 % of available isocyanate groups, and the amount of said fluorochemical monofunctional compounds is sufficient to react with between 60 and 90 % of available isocyanate groups.

Preferred classes of urethane compounds that may be present are represented by the following formulas:

R_{f}ZR²-X'(-CONH-Q(A)ₘ-NHCO-X'R³X'-)ₙCONH-Q(A)-NHCO-X'R¹Si(Y)₃

R_{f}ZR²-X'(-CONH-Q(A)ₘ-NHCOX'R³X'-)ₙCONHR¹Si(Y)₃

wherein:
R_{f}ZR²- is a residue of at least one of the fluorochemical monofunctional compounds;
R_{f} is a perfluoroalkyl group having 2 to about 12 carbon atoms, or a perfluoroheteroalkyl group having 3 to about 50 carbon atoms;
Z is a covalent bond, sulfonamido (-SO₂NR-), or carboxamido (-CONR-) where R is hydrogen or alkyl;
R¹ is an alkylene, heteroalkylene, aralkylene, or heteroaralkylene group;
R² is a divalent straight or branched chain alkylene, cycloalkylene, or heteroalkylene group of 1 to 14 carbon atoms, preferably 1 to 8 carbon atoms, more preferably 1 to 4 carbon atoms, and most preferably two carbon atoms, and preferably R² is alkylene or heteroalkylene of 1 to 14 carbon atoms;
Q is a multi-valent organic group that is a residue of the polyfunctional isocyanate compound;
R³ is a polyvalent, preferably divalent organic group which is a residue of the hydrophilic polyoxyalkylene ;
X' is -0-, -S-, or -N(R)-, wherein R is hydrogen or C₁-C₄ alkyl;
each Y is independently a hydroxy; a hydrolyzable moiety selected from the group consisting of alkoxy, acyloxy, heteroalkoxy, heteroacyloxy, halo, and oxime; or a non-hydrolyzable moiety selected from the group consisting of phenyl, alicyclic, straight-chain aliphatic, and branched-chain aliphatic, wherein at least one Y is a hydrolyzable moiety.
A is selected from the group consisting of R_{f}ZR²-OCONH-, (Y)₃SiR¹XCONH-, and (Y)₃SiR¹NHCOOR³OCONH-.
m is an integer from 0 to 2; and
n is an integer from 1 to 10.

It will be understood with respect to the above formulas that the compounds represent theoretical structures for the reaction products. The reaction product will contain a mixture of compounds in which the substitution patterns of the isocyanate groups will vary.

Polyfunctional isocyanate compounds useful in the present invention comprise isocyanate groups attached to the multivalent organic group, Q, which can comprise a multivalent aliphatic, alicyclic, or aromatic moiety; or a multivalent aliphatic, alicyclic or aromatic moiety attached to a blocked isocyanate, a biuret, an isocyanurate, or a uretdione, or mixtures thereof. Preferred Polyfunctional isocyanate compounds contain at least two and preferably three or more -NCO groups. Compounds containing two -NCO groups are comprised of divalent aliphatic, alicyclic, araliphatic, or aromatic moieties to which the - NCO radicals are attached. Preferred compounds containing three -NCO radicals are comprised of isocyanatoaliphatic, isocyanatoalicyclic, or isocyanatoaromatic, monovalent moieties, which are attached to a biuret or an isocyanurate.

Preferred polyisocyanates, in general, include those selected from the group consisting of hexamethylene 1,6-diisocyanate (HDI), 1,12-dodecane diisocyanate isophorone diisocyanate, toluene diisocyanate, dicyclohexylmethane 4,4'-diisocyanate, MDI, derivatives of all the aforementioned, including Desmodur™ N-100, N-3200, N-3300, N-3400, N-3600, and mixtures thereof.

Suitable fluorochemical monofunctional compounds include those that comprise at least one R_{f} group. The R_{f} groups can contain straight chain, branched chain, or cyclic fluorinated alkylene groups or any combination thereof. The R_{f} groups can optionally contain one or more heteroatoms (that is oxygen, sulfur, and/or nitrogen) in the carbon-carbon chain so as to form a carbon-heteroatom-carbon chain (that is a heteroalkylene group). Fully-fluorinated groups are generally preferred, but hydrogen or chlorine atoms can also be present as substituents, provided that no more than one atom of either is present for every two carbon atoms. It is additionally preferred that any R_{f} group contain at least about 40% fluorine by weight, more preferably at least about 50% fluorine by weight. The terminal portion of the group is generally fully-fluorinated, preferably containing at least three fluorine atoms, for example, CF₃O-, CF₃CF₂-, CF₃CF₂CF₂-, (CF₃)₂N-, (CF₃)₂CF-, SF₅CF₂-. In certain embodiments, perfluoroalkyl groups (that is, those of the formula CₙF₂ₙ₊₁-) wherein n is 2 to 12 inclusive are the preferred R_{f} groups, with n = 3 to 5 being more preferred and with n = 4 being the most preferred.

Useful fluorochemical monofunctional compounds include compounds of the following formula:

R_{f}-Z-R²-X

wherein:
R_{f} is a perfluoroalkyl group or a perfluoroheteroalkyl group;
Z is a connecting group selected from a covalent bond, a sulfonamido group, a carboxamido group, a carboxyl group, or a sulfonyl group; and
R² is a divalent straight or branched chain alkylene, cycloalkylene, or heteroalkylene group of 1 to 14 carbon atoms, preferably 1 to 8 carbon atoms, more preferably 1 to 4 carbon atoms, and most preferably two carbon atoms, and
X is an isocyanate-reactive functional groups, for example -NH₂; -SH; -OH;-N=C=O; or -NRH where R is H or a C₁-C₄ alkyl.

Certain preferred embodiments include those compositions comprising terminal fluoroalkyl groups having from two to twelve carbons, preferably from three to six carbons, and more preferably four carbons.

Useful perfluoroheteroalkyl groups correspond to the formula:

R¹_{f}-O-R_{f}²-(R_{f}³)_{q}- (XII)

wherein R¹_{f} represents a perfluorinated alkyl group, R_{f}² represents a perfluorinated polyalkyleneoxy group consisting of perfluorinated alkyleneoxy groups having 1, 2, 3 or 4 carbon atoms or a mixture of such perfluorinated alkylene oxy groups, R³_{f} represents a perfluorinated alkylene group and q is 0 or 1. The perfluorinated alkyl group R¹_{f} in formula (II) may be linear or branched and may comprise 1 to 10 carbon atoms, preferably 1 to 6 carbon atoms. A typical perfluorinated alkyl group is CF₃-CF₂-CF₂-: R³_{f} is a linear or branched perfluorinated alkylene group that will typically have 1 to 6 carbon atoms. For example, R³_{f} is -CF₂- or -CF(CF₃)-.

A preferred perfluorinated polyether group that corresponds to formula (XII) is CF₃-CF₂-CF₂-O-[CF(CF₃)-CF₂O]ₙ-CF(CF₃)- wherein n is an integer of 3 to 25.

Examples of the moiety "-Z-R²-" include organic groups that comprise aromatic or aliphatic groups that may be interrupted by O, N or S and that may be substituted, alkylene groups, oxy groups, thio groups, urethane groups, carboxy groups, carbonyl groups, amido groups, oxyalkylene groups, thioalkylene groups, carboxyalkylene and/or an amidoalkylene groups. Examples of functional groups T include thiol, hydroxy and amino groups.

In a particular embodiment, the fluorochemical monofunctional compound corresponds to the following formula:

R_{f}¹-[CF(CF₃)-CF₂O]ₙ-CF(CF₃)-Z-R²-X

wherein R_{f}¹ represents a perfluorinated alkyl group for example a linear or branched perfluorinated alkyl group having 1 to 6 carbon atoms, n is an integer of 3 to 25, Z is a carbonyl group or CH₂, R² is a chemical bond or an organic divalent or trivalent linking group for example as mentioned for the linking group Q above, and X represents an isocyanate reactive group and each X may be the same or different. Particularly preferred compounds are those in which R¹_{f} represents CF₃CF₂CF₂-. In accordance with a particular embodiment, the moiety - Z-R²-X is a moiety of the formula -CO-X-R^{a}(OH)ₖ wherein k is 1 or 2, X is O or NR^{b} with R^{b} representing hydrogen or an alkyl group of 1 to 4 carbon atoms, and R^{a} is an alkylene of 1 to 15 carbon atoms.

Hydrophilic polyoxyalkylene compounds, if present, suitable for use in preparing the first component fluorochemical urethane compounds comprised in the decorative laminate of the present invention include those polyoxyalkylene compounds that have an average functionality of greater than 1 (preferably, about 2 to 5; more preferably, about 2 to 3; most preferably, about 2, as difunctional compounds such as diols are most preferred). The isocyanate-reactive groups can be primary or secondary, with primary groups being preferred for their greater reactivity. Mixtures of compounds having different functionalities, for example mixtures of polyoxyalkylene compounds having one, two and three isocyanate-reactive groups, may be used provided the average is greater than 1. The polyoxyalkylene groups include those having 1 to 3 carbon atoms such as polyoxyethylene, polyoxypropylene, and copolymers thereof such as polymers having both oxyethylene and oxypropylene units.

Suitable silane compounds are those of the following formula:

X-R¹-Si-(Y)₃

wherein X is an isocyanate-reactive functional group such as -NH₂; -SH; -OH; -N=C=O; or -NRH where R is H or a C₁-C₄ alkyl;
R¹ is an alkylene, heteroalkylene, aralkylene, or heteroaralkylene group; and
each Y is independently a hydroxy; a hydrolyzable moiety selected from the group consisting of alkoxy, acyloxy, heteroalkoxy, heteroacyloxy, halo, and oxime; or a non-hydrolyzable moiety selected from the group consisting of phenyl, alicyclic, straight-chain aliphatic, and branched-chain aliphatic, wherein at least one Y is a hydrolyzable moiety.

Other preferred silane compounds are those which contain one or two hydrolysable groups, such as those having the structures R²OSi(R⁷)₂R¹XH and (R⁸O)₂Si(R⁷)R¹XH, wherein R¹ is as previously defined, and R⁷ and R⁸ are selected from the group consisting of a phenyl group, an alicylic group, or a straight or branched aliphatic group having from about 1 to about 12 carbon atoms. Preferably, R⁷ and R⁸ are a lower alkyl group comprising 1 to 4 carbon atoms.

More useful fluorochemical silanes such as fluorinated polyether isocyanate derived silanes are disclosed in U.S. Patent Application Pub. No. 2005/0054804. The fluorinated polyether isocyanate derived silanes are the reaction product of (i) a fluorinated polyether compound of the formula

(T'_{k'}-Q')_{y}-R_{f}-Q-Tₖ (XIII)

wherein R_{f} is a monovalent or divalent polyfluoropolyether group; Q and Q' are independently a chemical bond, a divalent organic linking group or a trivalent organic linking group; T and T' are each -NCO or an isocyanate reactive group; k' is an integer from 0 to about 5; k is at least 2; and y is 0 or 1 and (ii) a silane compound of the formula

T"-Q"-Si(Y₃₋ₓ)R'ₓ (XIV)

wherein T" is -NCO or an isocyanate reactive group; Q" is an organic divalent linking group; R' is an alkyl group, for example, a C₁-C₄ alkyl group, or an aryl group, such as, for example, phenyl, naphthyl, or substituted phenyl or naphthyl, wherein phenyl or naphthyl is substituted by one or more substituents such as C₁-C₄ alkyl, C₁-C₄ alkoxy, halo, nitro, and the like; Y is a hydrolyzable group; and x is 0 or 1; wherein at least one of T or T" is - NCO.

The term isocyanate reactive group is defined as a functional group that will react with an isocyanate group. Though not intended to be limiting, some examples of isocyanate reactive groups are: (i) alcohols, to yield urethanes, (ii) amines to yield ureas, (iii) thiols to yield thiocarbamates and (iv) carboxylic acids to yield carboxylic anhydrides or amides and the like. Particularly useful as isocyanate reactive groups are, for example, - CO₂R³, where R³ is hydrogen or hydroxyalkyl, -C(O)N(R¹)(R²), where R¹ and R² are independently hydrogen, hydroxyalkyl or polyalkylenepolyamine; -OH, -SH, and NHR', where R' is as defined above.

The monovalent or divalent polyfluoropolyether group R_{f} in the above formula (XIII) can include linear, branched, and/or cyclic structures, that may be saturated or unsaturated. It is a perfluorinated group (that is, all C-H bonds are replaced by C-F bonds). In one embodiment, the perfluorinated polyether group corresponds to the formula

-((R_{f}³)_{q'}-R_{f}²-O)_{z'}-R_{f}¹-(O-R_{f}²-(R_{f}³)_{q})_{z}- (XV)

wherein R_{f}¹ is a perfluorinated alkyl or a perfluorinated alkylene group, R_{f}² is a perfluorinated polyalkyleneoxy group consisting of perfluorinated alkyleneoxy groups having 1, 2, 3, or 4 carbon atoms or a mixture of such perfluorinated alkyleneoxy groups; R_{f}³ is a perfluorinated alkylene group or a substituted perfluorinated alkyl group; q and q' are independently chosen from 0 or 1; z is from 4 to 30, and z' is from 0 to 30. The perfluorinated alkyl or alkylene group R¹_{f} in formula (XV) may be linear, branched or cyclic and may contain catenary heteroatoms, such as N, O or S, and may contain 1 to 10 carbon atoms, preferably 1 to 6 carbon atoms. R²_{f} and R³_{f} are perfluorinated repeating units and combinations thereof. For example, R³_{f} is -(CₙF₂ₙ)- or -(CF(Z))-. R²_{f}, for example, includes perfluorinated repeating units such as -(CₙF₂ₙO)-, -(CF(Z)O)-,-(CF(Z)CₙF₂ₙO)-, -(CₙF₂ₙCF(Z)O)-, -(CF₂CF(Z)O)-, and combinations thereof. In these repeating units Z is a perfluoroalkyl group, a substituted perfluoroalkyl group, an oxygen-substituted perfluoroalkyl group, a perfluoroalkoxy group, or an oxygen-substituted perfluoroalkoxy group, all of which can be linear, branched, or cyclic, and preferably have about 1 to about 9 carbon atoms and 0 to about 4 oxygen atoms. Examples of polyfluoropolyethers containing polymeric moieties made of these repeating units are disclosed in U.S. Pat. No. 5,306,758.

Examples of linking groups Q, Q' and/or Q" include organic groups that comprise aromatic or aliphatic groups that may be interrupted by O, N or S and that may be substituted, alkylene groups, oxy groups, thio groups, and/or carbonyl groups. Q and Q' are each independently a chemical bond or an organic divalent or trivalent linking group for example as mentioned above. In compounds of formula I, k is at least 2, T and T' are as mentioned above and each T or T' may be independently chosen, and y is 0 or 1. In accordance with a particular embodiment, the moiety -T or -T' is a moiety of the formula -CO-N(R¹)(R²) where R¹ is for example-CH₂CH₂OH, -CH₂CH₂NHCH₂CH₂NH₂ or -CH₂CH₂NHCH₂CH₂NHCH₂CH₂NH₂; and R² is for example hydrogen or R¹.

The divalent linking group Q" in the above formula (XIV) can include linear, branched, or cyclic structures, that may be saturated or unsaturated. The group Q" can contain one or more heteroatoms (for example, oxygen, nitrogen, or sulfur) or functional groups (for example, carbonyl, amido, urethanylene or sulfonamido). Preferably, the divalent linking group Q" is a hydrocarbon group, preferably, a linear hydrocarbon group, optionally containing heteroatoms or functional groups. Examples of Q" groups include - CH₂O(CH₂)₃-, -CH₂OC(O)N(R)(CH₂)₃-, wherein R is H or lower alkyl group, -(CₙH₂ₙ)-N(H)-C(O)O- and -(CₙH₂ₙ)-, wherein n is about 2 to about 6. A preferred linking group Q" is -CH₂CH₂CH₂-.

Y represents a hydrolyzable group in formula (II) such as for example a halide, a C₁-C₄ alkoxy group, an acyloxy group or a polyoxyalkylene group, such as polyoxyethylene groups as disclosed in US 5,274,159. Specific examples of hydrolysable groups include methoxy, ethoxy and propoxy groups. R' independently represents a C₁-C₄ alkyl group, such as, for example, methyl and ethyl groups.

Useful fluorochemical silanes are also disclosed in U.S. Patent Application Pub. No. 2006/0147645. These fluorochemical silanes contain two perfluoro-lower alkyl groups or "tails" in close proximity to one another, called "swallow tail" silanes. Swallow tail silanes include the silanes of formula XVI:

R_{f}SO₂-N(R)(CₙH₂ₙ)CHZ(CₘH₂ₘ)N(R')SO₂R_{f} (XVI)

wherein
R_{f} is each independently CₚF₂ₚ₊₁, where p is 2 to 5;
R is a C₁ to C₄ alkyl or an aryl group;
m and n are both integers greater than 0;
Z is a group of the formula: (C_{m'}H_{2m'})X-Q-Si(Y)₃, in which m' is 0 to 4, X is O, S or NH and Q is-C(O)NH-(CH₂)_{n'}- or -(CH₂)_{n'}-, and R is as defined above; and R' is R or, when Z is H, a group of the formula -(CH₂)_{n'}-Si(Y)₃; n' is an integer of 1 to 20, and Y is a hydrolysable group.

The perfluoroalkylsulfonamido groups (R_{f}SO₂N-) may be the same or different. The perfluoroalkyl may each contain 2-5 carbon atoms, but preferably each has 4 carbon atoms.

In the above silanes of formula XVI, one embodiment has m as an integer from 1 to 6 and n as an integer from 1 to 6. One embodiment has R defined as independently -CH₃ or -CH₂CH₃. Preferably, n' may also vary from 1-10 and in one embodiment may be 3.

Representative fluorochemical compounds for use in the invention include, but are not limited to, [C₄F₉SO₂N(CH)₃CH₂]₂CHOCH₂CH₂CH₂Si(OCH₃)₃, [C₄F₉SO₂N(CH)₃CH₂]₂CHOCONHCH₂CH₂CH₂Si(OCH₃)₃, and C₄F₉SO₂N(CH)₃CH₂CH₂CH₂N(SO₂C₄F₉)CH₂CH₂CH₂Si(OCH₃)₃.

U.S. Patent Application Pub. No. 2007/0014927 discloses still more useful fluorochemical silanes that are fluorochemical urethanes. The urethane compounds comprise the reaction product of: (a) one or more polyfunctional isocyanate compounds; (b) one or more hydrophilic polyoxyalkylene compounds; (c) one or more fluorochemical monofunctional compounds and (d) one or more isocyanate-reactive silanes; and optionally comprise (e) a moiety having an isocyanate blocking group such as methyl ethyl ketone oxime, etc. The fluorochemical urethane compounds can be described as:

Q**(**NHCO**)**ₓ (X'R²ZR_{f})ₐ (X'R³X')_{b} (X'R⁴)_{c} (X'R¹Si(Y³))_{d} (X'W)ₑ

wherein:
x is an integer from 2 to 20,
a is from 1 to x,
b is from 1 to 0.3 x,
c is from 0 to 0.3 x,
d is from 0 to 0.25 x,
e is from 0 to 0.6 x
with the proviso that b + c is at least 0.0005 x, and Q, X', R², Z, R_{f}, R³, R⁴, R¹, Y, and W are as defined below.

Some preferred classes of urethane compounds are represented by the following formulas:

R_{f}ZR²-X'(-CONH-Q(A)ₘ-NHCO- X'R⁴-)ₙ (A)

R⁴X'(-CONH-Q(A)ₘ-NHCOX'R²ZR_{f})ₙ (B)

(R_{f}ZR²-X')₁(-CONH-Q(A)ₘ-NHCO-X'R³X'-)ₙCONH-Q(A)-NHCO-X'R¹Si(Y)₃ (C)

(R_{f}ZR²-X')₁(-CONH-Q(A)ₘ-NHCO-X'R³X'-)ₙCONHR¹Si(Y)₃ (D)

(RrZR²-X')₁(-CONH-Q(A)ₘ-NHCO-X'R³X'-)ₙCONH-Q(A)-NHCO-W (E)

wherein:
R_{f}ZR²- is a residue of at least one of the fluorochemical monofunctional compounds;
R_{f} is a perfluoroalkyl group having 2 to about 12 carbon atoms, or a perfluoroheteroalkyl group having 3 to about 50 carbon atoms;
Z is a covalent bond, sulfonamido (-SO₂NR-), or carboxamido (-CONR-) where R is hydrogen or alkyl, a carboxyl group, or a sulfonyl, group;
R¹ is an alkylene, heteroalkylene, aryl alkylene, or heteroaryl aliphatic group;
R² is a divalent straight or branched chain alkylene, cycloalkylene, or heteroalkylene group of 1 to 14 carbon atoms, preferably 1 to 8 carbon atoms, more preferably 1 to 4 carbon atoms; and most preferably two carbon atoms, and preferably R² is alkylene or heteroalkylene of 1 to 14 carbon atoms;
Q is a multi-valent organic group that is a residue of the polyfunctional isocyanate compound;
R³ is a polyvalent, preferably divalent, organic group which is a residue of the hydrophilic polyoxyalkylene;
R⁴ is monovalent organic group which is a residue of the hydrophilic polyoxyalkylene;
X' is -0-, -S-, or -N(R)-, wherein R is hydrogen or C₁-C₄ alkyl;
each Y is independently a hydroxy; a hydrolyzable moiety selected from the group consisting of alkoxy, acyloxy, heteroalkoxy, heteroacyloxy, halo, and oxime; or a non-hydrolyzable moiety selected from the group consisting of phenyl, alicyclic, straight-chain aliphatic, and branched-chain aliphatic, wherein at least one Y is a hydrolyzable moiety.

W is the residue of a moiety capable of reacting with an isocyanate group and possesses abeyant chemical reactivity such as oxime, lactam, phenol, and the like.

A is selected from the group consisting of R_{f}ZR²-OCONH-, (Y)₃SiR¹XCONH-, and (Y)₃SiR¹NHCOOR³OCONH-.
1 is an integer from 1 to (m+n-1).
m is an integer from 0 to 2; and
n is an integer from 1 to 10.

Fluorochemical oligomeric silanes that are useful as the fluorochemical silanes in the present invention are disclosed in WO 2008/014174. These fluorinated oligomeric silanes can be represented by formula (XVII):

X-M^{f}nM^{h}mM^{a}r-G (XVII)

wherein X represents an end group; M^{f} represents units derived from fluorinated monomers obtainable from a condensation of a fluorinated alcohol, a polyisocyanate, and an isocyanate reactive non-fluorinated monomer; M^{h} represents units derived from noun-fluorinated monomers; M^{a} represents units having a silyl group represented by the formula: 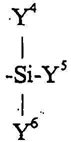 wherein each of Y⁴, Y⁵, and Y⁶ independently represents an alkyl group, an aryl group, or a hydrolyzable group, and at least one of Y⁴, Y⁵, and Y⁶ represents a hydrolyzable group;
G is a monovalent organic group comprising the residue of a chain transfer agent; n represents a value of 1 to 100; m represents a value of 0 to 100; r represents a value of 0 to 100; and n+m+r is at least 2;
with the proviso that at least one of the following conditions is fulfilled: (i) G is a monovalent organic group that contains a silyl group of the formula: 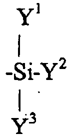 wherein Y¹, Y², and Y³ each independently represents an alkyl group, an aryl group, or a hydrolyzable group with at least one of Y¹, Y², and Y³ representing a hydrolyzable group; or (ii) r is at least 1.

The total number of units represented by the sum of n, m, and r in formula (I) is generally at least 2, and preferably at least 3 so as to render the compound oligomeric. The value of n in the fluorinated oligomeric silane is typically from 1 to 100 and particularly suitable from 2 to 20. The values of m and r-are typically from 0 to 100 and preferably from 1 to 30. According to a particular embodiment, the value of m is less than that of n and n+m+r is at least 2.

The units M^{f} in formula (XVII) representing the fluorinated oligomeric silanes are generally derived from fluorinated monomers obtainable from a condensation of a fluorinated alcohol, a polyisocyanate and an isocyanate reactive non-fluorinated monomer.

The fluorinated alcohol is typically a monofunctional alcohol or diol that is partially fluorinated or fully fluorinated. Generally the fluorinated alcohol will contain at least a perfluorinated moiety. Suitable fluorinated alcohols include those selected from monofunctional fluorinated alkanols or fluorinated diols having at least 3, preferably from 3 to 6 carbon atoms, perfluoropolyether compounds having one or more perfluorinated polyether groups and one or more hydroxyl groups or an oligomeric fluorinated alcohol or diol. Mixtures of fluorinated alcohols are contemplated for use as well.

A particularly suitable perfluorinated polyether group that is:

F(CF(CF₃)CF₂O)gCF(CF₃)-

wherein g is at least 3. Perfluorinated polyether groups of the above formula can conveniently be derived from the oligomerization of hexafluoropropyleneoxide (HFPO). In a particular suitable embodiment, g is an integer of 3 to 25, and the corresponding perfluorinated polyether group has a molecular weight of at least about 750 g/mol.

The non-fluorinated monomer useful in the synthesis of the oligomeric fluorinated alcohol or diol is typically a monomer containing an ethylenically unsaturated group capable of free radical polymerization and a hydrocarbon moiety. Hydrocarbon group containing monomers are well known and generally commercially available.

More useful perfluoropolyether silanes are disclosed in U.S. Patent No. 7,294,731 (Flynn et al.). The perfluoropolyether silanes are of the formula:

R_{f} [-R¹-C₂H₄-S-R²-Si(Y)ₓ(R³)₃₋ₓ]_{y},

wherein
R_{f} is a mono- or divalent perfluoropolyether group,
R¹ is a covalent bond, -O-, or a divalent alkylene or arylene group, or combinations thereof, said alkylene group optionally containing one or more catenary oxygen atoms;
R² is a divalent alkylene or arylene group, or combinations thereof, said alkylene groups optionally containing one or more catenary oxygen atoms;
Y is a hydrolysable group, and
R³ is a monovalent alkyl or aryl group,
x is 1,2 or 3, preferably 3, and
y is 1 or 2.

R_{f} represents a mono- or divalent perfluoropolyether group. The perfluoropolyether group can include linear, branched, and/or cyclic structures, and may be saturated or unsaturated. It is a perfluorinated group, that is, essentially all C-H bonds are replaced by C-F bonds. Preferably, it includes perfluorinated repeating units selected from the group of -(CₙF₂ₙ)-, -(CₙF₂ₙO)-, -(CF(Z))-, -(CF(Z)O)-, -(CF(Z)CₙF₂ₙO)-, - (CₙF₂ₙCF(Z)O)-, -(CF₂CF(Z)O)-, and combinations thereof. In these repeating units Z is a perfluoroalkyl group, a perfluoroalkoxy group, or perfluoroether group, all of which can be linear, branched, or cyclic, and preferably have about 1 to about 9 carbon atoms and 0 to about 4 oxygen atoms. "n" is at least 1, and preferably 1 to 4. Examples of perfluoropolyethers containing these repeating units are disclosed in U.S. Pat. No. 5,306,758 (Pellerite).

For the monovalent perfluoropolyether group (wherein y is 1 in formula (I) above), the terminal groups can be (CₙF₂ₙ₊₁)-, (CₙF₂ₙ₊₁O)- or (X'CₙF₂ₙO)-, which may be linear or branched and wherein X' is H, Cl, or Br, for example. Preferably, these terminal groups are perfluorinated. In these repeating units or terminal groups, n is 1 or more, and preferably 1 to 8. Preferred approximate average structures for a divalent fluorinated polyether group include -C₄F₈O-, C₃-F₆O-, -C₅F₁₀O-, -C₆F₁₂O-, -CF₂O(CF₂O)ₘ(C₂F₄O)ₚCF₂-, wherein an average value for m and p is 0 to 50, with the proviso that m and p are not simultaneously 0, -CF_{2O}(C₂F₄O)ₚCF₂-, -CF(CF₃)O-(CF₂CF(CF₃)O)ₚ-C₄F₈O-(CF(CF₃)CF₂O)ₚ-CF(CF₃)-, and -(CF₂)₃O(C₄F₈O)ₚ(CF₂)₃-, wherein an average value for each p is 1 to 50.

Of these, particularly preferred approximate average structures are -CF₂O(CF₂O)ₘ(C₂F₄O)ₚCF₂-, -CF₂O(C₂F₄O)pCF₂-, and -CF(CF₃)O-(CF₂CF(CF₃)O)ₚ-C₄F₈O-(CF(CF₃)CF₂O)p-CF(CF₃)-. Particularly preferred approximate average structures for a monovalent perfluoropolyether group include C₃F₇O(CF(CF₃)CF₂O)ₚCF(CF₃)- and CF₃O(C₂F₄O)ₚCF₂- wherein an average value for p is 1 to 50. As synthesized, these compounds typically include a mixture of polymers.

Preferably, the R¹ and R² groups are hydrocarbon groups, preferably, linear hydrocarbon groups, optionally containing one or more catenary heteroatoms. Examples of R¹ and R² groups include alkylenes of the formula -(CₘH₂ₘ)-, wherein m is about 2 to about 20, and one or more non-adjacent -CH₂- groups are replaced by ether oxygen atoms, for example -(CₘH₂ₘ)-O-(C_{m'}H_{2m'})-, where m is 2 to 20, m' is 0 to 20 and m + m' is 2 to 20.

Examples of preferred perfluoropolyether silanes include, but are not limited to, the following approximate average structures. The number of repeat units n and m will vary, with n from 1 to 50, generally 3 to 30, and n+m up to 30.

C₃F₇O[CF(CF₃)CF₂O]ₙCF(CF₃)CH₂OC₃H₆SC₃H₆Si(OCH₃)₃

C₃F₇O[CF(CF₃)CF₂O]ₙCF(CF₃)CH₂OC₃H₆SC₃H₆Si(OC₂H₅)₂

C₃F₇O[CF(CF₃)CF₂O]ₙCF(CF₃)CO₂C₃H₆SC₃H₆Si(OCH₃)₃

C₃F₇O[CF(CF₃)CF₂O]ₙCF(CF₃)CO₂C₃H₆SC₃H₆Si(OC₂H₅)₃

(CH₃O)₃SiC₃H₆SC₃H₆OCH₂CF₂(OC₂F₄)ₙ(OCF₂)nCF₂CH₂OC₃H₆SC₃H₆Si(OCH₃)₃

(C₂H₅O)₃SiC₃H₆SC₃H₆OCH₂CF₂(OC₂F₄)ₙ(OCF₂)nCF₂CH₂OC₃H₆SC₃H₆Si(OC₂H₅)₃

(CH₃O)₃SiC₃H₆SC₃H₆OCH₂CF(CF₃)[OCF₂CF(CF₃)]ₙOC₄F₉O[(CF(CF₃)CF₂O]ₘCF(CF₃)C H₂OC₃H₆SC₃H₆Si(OCH₃)₃

(C₂H₅O)₃SiC₃H₆SC₃H₆OCH₂CF(CF₃)[OCF₂CF(CF₃)]ₙOC₄F₉O[(CF(CF₃)CF₂O]ₘCF(CF₃) CH₂OC₃H₆SC₃H₆Si(OC₂H₅)₃

C₃F₇O[CF(CF₃)CF₂O]ₙCF(CF₃)CH₂CH₂SC₃H₆Si(OCH₃)₃

C₃F₇O[CF(CF₃)CF₂O]ₙCF(CF₃)CH₂CH₂SC₃H₆Si(OC₂H₅)₃

C₃F₇O[CF(CF₃)CF₂O]ₙCF(CF₃)CF₂OC₃H₆SC₃H₆Si(OCH₃)₃

C₃F₇O[CF₂CF₂CF₂O]ₙC₂F₄CH₂OC₃H₆SC₃H₆Si(OCH₃)₃

C₃F₇O[CF₂CF₂CF₂O]ₙC₂F₄CH₂CH₂SC₃H₆Si(OCH₃)₃.

WO 2008/112400 provides useful fluorochemical silane compounds of the formula formula:

(R_{f})ₓ⁅R¹-(R²)_{y}]_{z} (XVIII)

wherein
R_{f} is a fluorine-containing group;
R¹ is a covalent bond, a polyvalent alkylene or arylene group, or combinations thereof, said alkylene groups optionally containing one or more catenary oxygen or nitrogen atoms
R² is a silane-containing group derived from the Michael reaction between an aminosilane and an acryloyl group;
x and y are each independently at least 1, and
z is 1 or 2.

These compounds have at least one fluorine-containing group and at least one silane-containing moiety derived from the Michael reaction between an aminosilane and an acryloyl compound (such as an acrylated polyol having at least one fluorine-containing group).

With respect to Formula (XVIII), R² is derived by Michael addition of an aminosilane to an acryloyl group, as in the following formula: 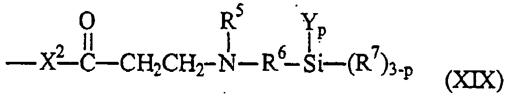 wherein
X² is -O,-S- or -NR⁴-, where R⁴ is H or C₁-C₄ alkyl,
R⁵ is C₁-C₄ alkyl, or -R⁶-Si(Yₚ)(R⁷)₃₋ₚ or (R_{f})ₓ-R¹-X²-C(O)-CH₂CH₂-;
R⁶ is a divalent alkylene group, said alkylene groups optionally containing one or more catenary oxygen or nitrogen atoms;
Y is a hydrolysable group,
R⁷ is a monovalent alkyl or aryl group, and
p is 1, 2 or 3.

The R_{f} groups may comprise a monovalent perfluoroalkyl-containing group or a perfluorooxyalkyl-containing group, or a divalent perfluoroalkylene-containing group or a perfluorooxyalkylene-containing group. More particularly, R_{f} may be represented by Formula XX: 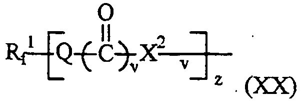 wherein
R_{f}¹ is a monovalent perfluoroalkyl or a perfluorooxyalkyl group, or a divalent perfluoroalkylene or a perfluorooxyalkylene group.
Q can be a covalent bond, or a divalent linking group such as an alkylene, an arylene, an aralkylene, an alkarylene, Q can optionally include catenary heteroatoms such as O, N, and S, and combinations thereof. Q can also optionally include a heteroatom-containing functional group such as carbonyl or sulfonyl, and combinations thereof, such as sulfonamide, carboxamido, or ester, Q is further selected such that the "Q-CO-X²-" moiety is not a carbamate, urea, or carbonate group; that is the atom adjacent the carbonyl is not a heteroatom;
X² is -0-, -NR⁴- or -S- , where R⁴ is H or C₁-C₄ alkyl,
z is 1 or 2, and
v is 0 or 1.

The R_{f}¹ groups of Formula (XVIII) can contain straight chain, branched chain, or cyclic fluorochemical groups or any combination thereof. The R_{f}¹ groups can be mono- or divalent, and can optionally contain one or more catenary oxygen atoms in the carbon-carbon chain so as to form a carbon-oxygen-carbon chain (that is a perfluorooxyalkylene group). Fully-fluorinated groups are generally preferred, but hydrogen or other halo atoms can also be present as substituents, provided that no more than one atom of either is present for every two carbon atoms.

It is additionally preferred that any R_{f}¹ group contain at least about 40% fluorine by weight, more preferably at least about 50% fluorine by weight. The terminal portion of the monovalent R_{f}¹ group is generally fully-fluorinated, preferably containing at least three fluorine atoms, for example, CF₃-, CF₃CF₂-, CF₃CF₂CF₂-, (CF₃)₂N-, (CF₃)₂CF-, SF₅CF₂-In certain embodiments, monovalent perfluoroalkyl groups (that is, those of the formula CₙF₂ₙ₊₁-) or divalent perfluoroalkylene groups (that is, those of the formula -CₙF₂ₙ-) wherein n is 2 to 12 inclusive are the preferred R_{f}¹ groups, with n = 3 to 5 being more preferred and with n = 4 being the most preferred.

With respect to the R_{f} group of Formula I or the R_{f}¹ group of Formula III, where y or z is 2, fluorinated polyols and polyamines are contemplated. Preferred fluorinated polyols include N-bis(2-hydroxyethyl) perfluorobutylsulfonamide; fluorinated oxetane polyols made by the ring-opening polymerization of fluorinated oxetane such as Poly-3-Fox™ (available from Omnova Solutions, Inc., Akron Ohio); polyetheralcohols prepared by ring opening addition polymerization of a fluorinated organic group substituted epoxide with a compound containing at least two hydroxyl groups as described in U.S. Pat. No. 4,508,916 (Newell et al); perfluoropolyether diols such as Fomblin™ ZDOL (HOCH₂CF₂O(CF₂O)₈₋₁₂(CF₂CF₂O)₈₋₁₂CF₂CH₂OH), available from Solvay, Thorofore, NJ); 1,4-bis(1-hydroxy-1,1-dihydroperfluoroethoxyethoxy)perfluoro-n-butane (HOCH₂CF₂OC₂F₄O(CF₂)₄OC₂F₄OCF₂CH₂OH); and 1,4-bis(1-hydroxy-1,1-dihydroperfluoropropoxy)perfluoro-n-butane (HOCH₂CF₂CF₂O(CF₂)₄OCF₂CF₂CH₂OH).

More preferred polyols comprised of at least one fluorine-containing group include N-bis(2-hydroxyethyl)perfluorobutylsulfonamide; 1,4-bis(1-hydroxy-1,1-dihydroperfluoropropoxy)perfluoro-n-butane (HOCH₂CF₂CF₂O(CF₂)₄OCF₂CF₂CH₂OH) and CF₃CF₂CF₂-O-[CF(CF₃)CF₂O]ₙ -CF(CF₃)-, wherein n is an integer of 3 to 25. This perfluorinated polyether group can be derived from an oligomerization of hexafluoropropylene oxide.

In addition, a nucleophilic fluorochemical compound may be reacted with an acrylic ester (or equivalent), followed by Michael addition of the aminosilane to produce a compound of the following formula: 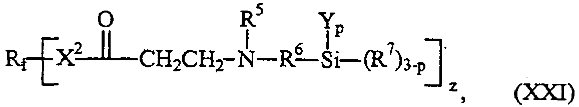 wherein
R_{f} is a fluorine-containing group;
X² is -O,-S- or -NR⁴-, where R⁴ is H or C₁-C₄ alkyl,
R⁵ is C₁-C₄ alkyl, or -R⁶-Si(Yₚ)(R⁷)₃₋ₚ or (R_{f})ₓ- X²-C(O)-CH₂CH₂-;
R⁶ is a divalent alkylene group, said alkylene groups optionally containing one or more catenary oxygen atoms;
Y is a hydrolysable group,
R⁷ is a monovalent alkyl or aryl group,
p is 1, 2 or 3, and
z is 1 or 2.

Still more useful Michael-adduct fluorochemical silanes are disclosed in U.S. Patent No. 7,335,786 (Iyer et al.). The Michael-adduct fluorochemical silane compounds are of the formula:

(R_{f})ₓ⁅R¹-(R²)_{y}]_{z} (XXII)

wherein
R_{f} is a fluorine-containing group, including a monovalent perfluoroalkyl-containing group or a perfluorooxyalkyl-containing group group, or a divalent perfluoroalkylene-containing group or a perfluorooxyalkylene-containing group;
R¹ is a covalent bond, a polyvalent alkylene or arylene group, or combinations thereof (such as aralkylene or alkarylene), said alkylene groups optionally containing one or more catenary oxygen or nitrogen atoms:
R² is a silane-containing group derived from the Michael reaction between a fluorochemical amine and an acryloyl silane;
x and y are each independently at least 1, and
z is 1 or 2.

With respect to Formula (XXII), R² is of the following formula: 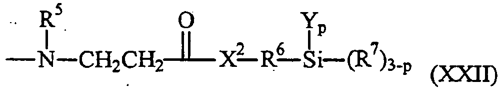 wherein
X² is -O-, -S-, or -NR⁴-, where R⁴ is H or C₁-C₄ alkyl,
R⁵ is H, C₁-C₄ alkyl, or -CH₂CH₂-C(O)-X²-R⁶-Si(Yₚ)(R⁷)₃₋ₚ;
R⁶ is a divalent alkylene group, said alkylene groups optionally containing one or more catenary oxygen atoms;
Y is a hydrolysable group,
R⁷ is a monovalent alkyl or aryl group, and
p is 1, 2 or 3.

The R_{f} groups may comprise a monovalent perfluoroalkyl-containing group or a perfluorooxyalkyl-containing group, or a divalent perfluoroalkylene-containing group or a perfluorooxyalkylene-containing group. More particularly, R_{f} may be represented by Formula XXIII: 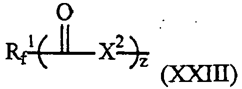 wherein
R_{f}¹ is a monovalent perfluoroalkyl or a perfluorooxyalkyl group, or a divalent perfluoroalkylene or a perfluorooxyalkylene group,
X² is -O-, -NR⁴- or -S-, where R⁴ is H or C₁-C₄ alkyl,
z is 1 or 2.

The R_{f}¹ groups of Formula XXIII can contain straight chain, branched chain, or cyclic fluorochemical groups or any combination thereof. The R_{f}¹ groups can be mono- or divalent, and can optionally contain one or more catenary oxygen atoms in the carbon-carbon chain so as to form a carbon-oxygen-carbon chain (that is a perfluorooxyalkylene group). Fully-fluorinated groups are generally preferred, but hydrogen or other halo atoms can also be present as substituents, provided that no more than one atom of either is present for every two carbon atoms.

It is additionally preferred that any R_{f}¹ group contain at least about 40% fluorine by weight, more preferably at least about 50% fluorine by weight. The terminal portion of the monovalent R_{f}¹ group is generally fully-fluorinated, preferably containing at least three fluorine atoms, for example, CF₃-, CF₃CF₂-, CF₃CF₂CF₂-, (CF₃)₂N-, (CF₃)₂CF-, SF₅CF₂-In certain embodiments, monovalent perfluoroalkyl groups (that is, those of the formula CₙF₂₊₁-) or divalent perfluoroalkylene groups (that is, those of the formula -CₙF₂ₙ-) wherein n is 2 to 12 inclusive are the preferred R_{f}¹ groups, with n = 3 to 5 being more preferred and with n = 4 being the most preferred.

Useful Michael-adduct fluorochemical silane compounds may be of the formula: 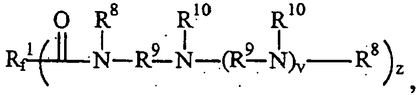 wherein
R_{f}¹ is a monovalent perfluoroalkyl or a perfluorooxyalkyl group, or a divalent perfluoroalkylene or a perfluorooxyalkylene group,
each R⁸ represents H, an alkyl group having from 1 to 4 carbon atoms, or an aryl group having from 6 to 10 carbon atoms; and
each R⁹ independently represents an alkylene group having from 2 to 8 carbon atoms; and
v is at least 1, preferably greater than 2,
z is 1 or 2;
each R¹⁰ is independently H, an alkyl group having from 1 to 4 carbon atoms, or an aryl group having from 6 to 10 carbon atoms, an R_{f}¹-C(O)- or -CH₂CH₂C(O)-X²-R⁶ Si(Y)ₚ(R⁷)₃₋ₚ, where X² is -O-, -NR⁴- or -S-, where R⁴ is H or C₁-C₄ alkyl, R⁶ is a divalent alkylene group, said alkylene groups optionally containing one or more catenary oxygen atoms; Y is a hydrolysable group, R⁷ is a monovalent alkyl or aryl group, and p is 1, 2 or 3; wherein the compounds contain at least one fluorinated group and at least one silane group.

Numerous examples of fluorochemical silanes that are useful in the protective coating compositions have been disclosed above. One of skill in the art will appreciate, however, that useful fluorochemical silanes are not limited to those examples above.

Fluorochemical silanes are typically present in the compositions in a range from about 0.01% to about 10% by weight; preferably, about 0.2% to about 2% by weight.

### Cationic Photoinitiator

The compositions also comprise a cationic photoinitiator for cationically polymerizing the compositon using ultraviolet (UV) light. Useful cationic photoiniators include diaryliodonium salts, triarylsulfonium salts benzylsulfonium salts, phenacylsulfonium salts, N-benzylpyridinium salts, N-benzylpyrazinium salts, N-benzylammonium salts, phosphonium salts, hydrazinium salts, and ammonium borate salts. Cyracure™ UVI-6976 (a mixture of triarylsulfonium hexafluoroantimonate salts in propylene carbonate) and UVI-6992 are examples of cationic photoinitiators available from Dow Chemical. Darocur™ 1173 cationic photoinitator can be obtained from Ciba Geigy Co. Cationic initiator is typically present in the compositions in a range from about 1% to about 10% by weight.

### Optional Components

In some embodiments, the compositions further comprise one or more diepoxide compounds. Diepoxide compounds can, for example, accelerate polymerization of the composition. They can also be used to adjust the softness or to reduce brittleness of the cured composition.

Suitable diepoxide comonomers include those disclosed in U.S. Patent No. 4,293,606 (Zollinger et al.) of the formula: 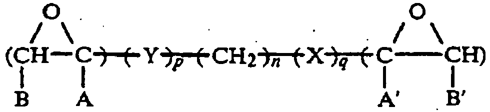 wherein n=1 to 6, X and Y independently represent (1) -O(̵CH₂)*ₘ*-, wherein m = 1 or 2 and the terminal carbon atom of this group is directly connected to the carbon of the epoxy group, or (2) 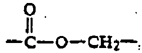 with the bond from the carbonyl carbon atom directly connected to the bridging group (̵CH2)̵ₙ, p+q = 1 or 2 and p and q are independently 0 or 1, A and B, and A' and B' are independently H or, when fused together as A and B or A' and B', the atoms necessary to form a 5- or 6-membered cycloaliphatic ring, and 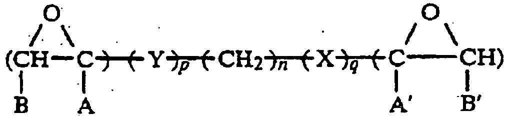 wherein A and B and A' and B'are as defined above r and u are independently integers of 1 to 6, and s is an integer of 1 to 6.

Preferably, the diepoxide comonomer is a cycloaliphatic diepoxide compound. A preferred diepoxide compound is 3,4-epoxycyclohexylmethyl-3,4-epoxycyclohexanecarboxylate.

If used, diepoxide comonomers are typically present in the compositions in amounts of less than about 12% by weight.

The protective coating compositions may also comprise other optional components such as, for example, mono- and/or di-silanes (for example, to adjust hardness), surfactant, matting agents, inorganic particles, and the like.

### Articles and Methods

The article according to the present invention is a decorative laminate according to claim 1 and the methods according to the invention are as defined in claims 11 and 12.

The protective coating compositions can be used to provide durability, clarity, stain- and soil-resistance, water- and soil-repellency, and/or easy-cleaning properties to substrates.

For example, the protective coatings can be applied to a hard substrate such as, for example, a substrate comprising natural stone, man-made stone, ceramic, vinyl, wood, masonry, cork, glass, or the like. The protective coating can be applied using coating techniques known in the art, and then cured (that is, cationically polymerized) using ultraviolet light. Typically, when the protective coating is used on a hard substrate, the protective layer will be between about 0.1 mils and about 2 mils thick.

The protective coating compositions are particularly well-suited for use as protective coatings on decorative laminates. Decorative laminates for furniture typically comprise a stabilizing layer (or "balance paper" layer), a core layer, and a decorative layer. Decorative laminates for flooring typically comprise an additional wear layer on top of the decorative layer.

The stabilizing layer is usually made from paper (for example, cellulose paper) that has been saturated with an aminoplast thermosetting resin (for example, a phenolic resin or melamine resin). The stabilizing layer creates an equality on either side of the core layer to reduce the tendency of warping.

The core is usually made from a type of particle board or fiber board, but other structurally robust materials may be used. The core is typically selected for desired strength and thickness. If desired, the core can be treated with water repellant materials to prevent water penetration.

The decorative layer is selected to give the laminate its desired-design, color, or other aesthetic appearance. The decorative layer can be, for example, a printed paper or fiber with a desired decorative image therein, a vinyl sheet with such an image, or a wood layer whose outer surface is the desired image. In some embodiments, the decorative layer is a decorative paper in a resin (for example, a melamine resin).

The decorative layer can be brittle; so many decorative laminates also include a wear layer. The wear layer is typically made from paper (for example, cellulose paper) saturated with phenolic resin or melamine resin. The wear layer often also includes particulate to provide abrasion resistance.

Protective overlayers comprising the protective coating compositions can be coated on the topmost layer of the decorative laminate (for example, typically the decorative layer for furniture laminates, and typically the wear layer for flooring laminates).

For example, prior to laminating the layers together of a decorative article together, the protective coating composition can be coated onto the topmost layer of the article. Any useful coating technique known in the art may be utilized. The protective coating composition can then be cured on top of the decorative article using UV light. After the protective coating is cured, the decorative article can then be laminated using heat and pressure (for example, using a hot plate at high pressure). Typically, the decorative article will be laminated at a temperature between about 150°C and about 250°C and at a pressure between about 300 psi and about 700 psi). This method of making a decorative laminate can be carried out in a batch mode or a continuous mode.

Alternatively, the protective coating composition can be coated onto the topmost layer of a pressed laminate. The protective coating composition can then be cured.

Typically, the protective overlayer comprising the protective coating composition a will be between about 0.1 mils and about 5 mils thick.

Decorative laminates comprising the protective overlayers of the invention have abrasion-resistance, stain- and soil-resistance, water- and soil-repellency, easy-clean properties, and high transmittance of decorative images on underlying layers. There is a visible reduction in reflectance off the protective layer as compared to the reflectance off the decorative layer, or wear layer if it is the topmost layer, as viewed by the naked eye. In other words, placing a protective-overlayer on a decorative laminate reduces the reflectance off the topmost layer of the laminate, and the reduction is visible to the naked eye.

When abrasion-resistance and high transmittance of decorative images are of primary importance (and stain- and soil-resistance, water- and soil-repellency, and easy-clean properties are of little importance), protective coating compositions comprising epoxy-terminated silane compound(s) and cationic photoinitiator can be used as protective overlayers on laminates. Decorative laminates comprising a decorative overlayer of such protective coating compositions can be made using the methods described above.

### EXAMPLES

Objects and advantages of this invention are further illustrated by the following examples, but the particular materials and amounts thereof recited in these examples, as well as other conditions and details, should not be construed to unduly limit this invention.

### Test Methods

**Contact Angle -** Coatings were cleaned with isopropyl alcohol (IPA) and heptane before being subjected to measurement of contact angles. Measurements were made using as-received reagent-grade hexadecane (Aldrich) on a video contact angle analyzer available as product number VCA-2500XE from AST Products (Billerica, MA). Reported values are the averages of measurements on at least three drops measured on the right and the left sides of the drops.

**Reflectance Measurements:** The total and reflectance of2'x2" laminate samples of Example 1 and Control Example C1 were measured using a PERKIN ELMER™ UV/VIS/NIR Spectrometer Lambda 900.

**Sharpie Marker Removeability** An ink marking was applied to the surface layer with a pen commercially available under the trade designation "Sanford Sharpie, Fine Point permanent marker, No. 30001". Observations were made to determine whether the ink mark was easily removed by wiping with a dry tissue such as commercially available from Kimberly Clark Corporation, Roswell, GA under the trade designation "SURPASS FACIAL TISSUE. The marked sample was then placed next to a 1-5 rating standard with 1 being the lightest (practically all ink stain is removed) and 5 being the darkest.

**Gloss Measurements:** 60 degree gloss was measured using a glossmeter.

### Examples 1 and 2 and Control Example C1

A coating composition was prepared by mixing well the following materials together:
75.3 parts of gamma-glycidoxypropyltrimethoxysilane (from GE Silicones),
0.3 parts of SIL WET™ L-7220 Surfactant (from GE Silicones),
9.5 parts of limonene monoxide (from Millenium),
6.0 parts of CYRACURE™ UVI- 6976 Photoinitiator (from Dow Chemicals),
8.4 parts of 3,4-epoxycyclohexylmethyl-3,4-epoxycyclohexanecarboxylate (from Dow Chemicals), and
0.5 parts of PFPEBAPS (perfluoropolyether-bis-amidopropyltrimethoxysilane described in U.S Patent 6,613,860 as PFPES-1)

This composition was coated onto a 5" x 5" sheet of melamine-impregnated overlay paper (AC3 TM0461 from Coveright Surfaces, Inc.) using a Meyer Bar (#0) to give a 4.464 g/in² add-on weight and then photopolymerized using a PRC UV processor with medium pressure mercury lamp (Model # 84-502 with light output measured: UV-A/UV-B/UV-C/UV-V at 341/235/42/138 mJ) at a line speed of 26 ft/minute to give the overlay paper with a smooth hard coat. The coated overlay sheet was placed on top of similar sized under layers, also obtained from Coveright Surfaces, Inc. in the following order -- a sheet of decorated melamine paper DWA printed in black color, a 5/16" fiberboard, and a sheet of balance paper (TMB900). Then the entire composite was pressed between two stainless steel plates at a pressure of 12,500 pounds at 180°C for 23 seconds to yield a dark laminate board.

For Example 2, a coating composition was prepared same way as in Example 1 except using the following materials:
75.8 parts of gamma-glycidoxypropyl trimethoxysilane,
9.5 parts of limonene monoxide,
6.0 parts of CYRACURE™ UVI- 6976 Photoinitiator,
8.4 parts of 3,4-epoxycyclohexylmethyl-3,4-epoxycyclohexanecarboxylate, and
0.3 parts of SIL WET™ L-7220 Surfactant.
The overlay melamine paper was coated, cured and then made into laminate boards the same way as Example 1.

For Control Example C1, a color laminate board was made identically as Example 1 except without any coating on the overlay paper before lamination.

Reflectance Measurements: The total and reflectance of 2'x2" laminate samples of Example 1, Example 2 and Control Example C1 were measured using a PERKIN ELMER™ UV/VIS/NIR Spectrometer Lambda 900. Example 2 provided very similar reflectance as did Example 1. It had representative total and diffusion reflectance measurements of 6.57% and 3.75%, respectively, at 550 nm comparing with 6.50% and 3.61% for Example 1 and 8.20% and 4.52%, respectively, for Control Example C 1. It is clear that the laminates of the invention exhibit lower total and diffusion reflectance as compared to the Control Example C1 sample. This phenomenon is further verified by a visual observation test wherein Examples 1 and 2 are each seen to have richer and closer to the original printed color of the decorated paper appearance as well as less white-blurring as compared with the control sample without the coating useful in this invention. It was surprising to discover that such small differences in reflection measurements result in such drastic difference in appearance to the naked eye.

### Examples 3-5

Coating compositions were prepared similarly as Example 1 and the weight percentages are tabulated in Table-1. The materials were coated on pressed black laminate boards prepared exactly the same way as Control Example C1:

| **TABLE-1** | | | | |
|---|---|---|---|---|
| | Coating Materials, % | Ex 3 | Ex 4 | Ex 5 |
| A | gamma-glycidoxypropyltrimethoxysilane | 73.83 | 74.83 | 74.83 |
| B | CYRACURE™ UVI-6976 | 6.00 | 6.00 | 6.00 |
| C | Limonene Monoxide | 9.50 | 9.50 | 9.50 |
| D | ERL-4221 diepoxide from Dow Chemicals | 8.37 | 8.37 | 8.37 |
| E | SIL WET™ L-7220 | 0.30 | 0.30 | 0.30 |
| F | PFPEBAPS | 1.00 | 0.00 | 1.00 |
| G | SYLOID™ C-1007 matting agent from W.R. Grace | 1.00 | 1.00 | 0.00 |

### Example 6 and Control Example C2

Coating composition, the same as Example 5, was coated on a 5"x5" black decorated melamine paper to give a coating weight of 14.632 g/m². Then it was made to laminate board the same way as Example 5 except without using any overlay paper on top of the coated decorated layer.

For Control Example C2, a laminate was made the same way as Example 6 except without any coating on the decorated layer.

Properties of Examples 1-6 and Control Examples C1 and C2 are listed in TABLE-2:

**TABLE-2**

| | | C1 | Ex 1 | Ex 2 | Ex 3 | Ex 4 | Ex 5 | Ex 6 | C2 |
|---|---|---|---|---|---|---|---|---|---|
| A | Coating Weights, g/m2 | --- | 4.464 | 8.000 | --- | --- | --- | 14.632 | --- |
| B | Receding Contact Angle, C16H34 | 10 | 48 | 17 | 48 | 23 | 16 | 50 | 11 |
| C | Gloss | 53 | 48 | 50 | 58 | 58 | 74 | 29 | 52 |
| D | Total Reflection | 8.48 | 6.50 | 6.57 | 7.21 | 6.69 | 6.64 | 6.18 | 6.87 |
| E | Color Intensity (Visual Test) | std | Richer than C1 | Richer than C1 | Richer than C1 | Richer than C1 | Richer than C1 | Richer than C2 | std. |
| F | Sharpie Marker Removeability Scale of 1-5, 1 is best | --- | 1 | 5 | --- | --- | 1 | 1 | 4 |

The results in TABLE-2 indicate that coatings useful in this invention can lower the total reflectance of the melamine top protective layer even when additional inorganic particles are used in the coating compositions (Example 3 and 4). The reflectance reduction appears hot affected by the variety of gloss levels of the final coated surface. The thickness of the transparent protective layer is not limited specifically. When an appropriate fluorochemical is introduced in the coating compositions (Examples 1, 3, 5, and 6) before or after lamination it can greatly reduce the surface energy and provide easy-cleaning properties to difficult stain such as permanent SHARPIE™ Marker ink.
Example 6 simulates a furniture application when an overlay layer is typically not used because a high abrasion resistance is not required.

### Example 7 and Control Example C3

Coating composition, the same as Example 5, was coated on a decorated melamine paper with wood grains instead of black color at a coating weight of 9.3372 g/m². Then it was made to laminate board the same way as Example 5,

Laminate was made exactly the same as Control Example C1 except using a same decorated melamine paper with wood grains as the Example 7 without any coating.

The laminate of Example 7 showed much clearer wood grain image with less haze as compared with the Control Example C3 sample.

### Examples 8-9 and Control Example C4

Engineering wood Honeycomb planks from Ultrafit Engineering Wood were coated the same way as Example 1 using compositions described in TABLE-3 to give coating weights at 12.92 and 7.07 g/m². The coated wood planks were cured under nitrogen with ultraviolet light measured at UV-A/UV-B/UV-C/UV-V 874/725/148/368 mJ. SARTOMER™ SR-306, tripropylene glycol diacrylate obtained from Sartomer Co. DAROCUR™ 1173 photoinitator was obtained from Ciba Geigy Co, and HFPO oligomer methacrylate A was a compound having the following structure:

CF₃CF₂CF₂-O-(CF(CF₃)CF₂O)₆.₈-CF(CF₃)CONHCH₂CH₂O₂CC(CH₃)=CH₂.

Engineering wood Honeycomb plank from Ultrafit Engineering Wood was used without any modification.

The properties of the coated samples from Examples 8, 9, and Control 4 are listed in TABLE-3:

**TABLE-3**

| | | Ex 8 | Ex 9 | C4 |
|---|---|---|---|---|
| A | SATOMER™ 306 | 75.83 | 78.83 | --- |
| B | gamma-Methacryloxypropyltrimethoxy silane | 3.00 | --- | --- |
| C | Limonene Monoxide | 9.50 | 9.50 | --- |
| D | ERL-4221 | 8.37 | 8.37 | --- |
| E | SIL WET™ L-7220 | 0.30 | 0.30 | --- |
| F | DAROCUR 1173 photoinitiator | 1.00 | 1.00 | --- |
| G | PFPEBAPS | 1.00 | --- | --- |
| H | HFPO oligomer methacrylate A | | 1.00 | --- |
| I | SYLOID™ C-1007 | 1.00 | 1.00 | --- |
| Properties | | | | |
| | Receding Contact Angle, C16H34 | 32 | 59 | 10 |
| | Gloss | 69 | 78 | 71 |
| | SHARPIE™ Marker Removeability | 2 | 1 | 5 |
| | Appearance (Visual Test) | clearer wood grains | clearer wood grains | std. |

The clarity improvement by the coatings useful in this invention can be achieved by different chemistries, polyacrylates in Example 9, and polyepoxy chemistry of previous examples as well as the combination of two different polymers such as in Example 8.

### Examples 10 and Control Example C5

Kitchen Cherry Wood cabinet doors from Schrock were coated using the same technique as Example 8 except it was coated with base coat composition first, cured, and followed with a topcoat described in TABLE-4. The coated wood doors were all cured under nitrogen using ultraviolet light measured at UV-A/UV-B/UV-C/UV-V 601/417/73/241 mJ.

Kitchen Cherry Wood cabinet doors from Schrock were used without any modification for Control Example C5.

| **TABLE-4** | | | | |
|---|---|---|---|---|
| | | Ex 10 | | C5 |
| | Composition in percent | Base coat | Topcoat | 32-1 |
| A | gamma-glycidoxypropyltrimethoxysilane | 73.83 | 73.33 | 73.83 |
| B | CYRACURE™ UVI-6976 | 9.00 | 9.00 | 9.00 |
| C | Limonene Monoxide | 7.50 | 7.50 | 7.50 |
| D | ERL-4221 | 8.37 | 8.37 | 8.37 |
| E | SILWET™ L-7220 | 0.30 | 0.30 | 0.30 |
| F | PFPEBAPS | | 0.50 | |
| G | SYLOID™ C-807 | 1.00 | 1.00 | 1.00 |

| | Properties | | | |
|---|---|---|---|---|
| H | Receding Contact Angle, C16H34 | 55 | | 9 |
| I | Gloss | 68 | | 43 |
| K | SHARPIE™ Marker Removal | 1 | | 5 |
| L | Appearance | wood grains are Clearer | | std. |

### Examples 11-12 and Control Example C6

CONGOLEUM™ vinyl flooring tiles, 12" x 12" x 1/16" (thickness), in black (UPC 88699 50753, from Congoleum) were coated using the same technique and compositions as Example 1 and 2. The coated tiles were cured under nitrogen atmosphere using light of UV-A/UV-B/UV-C/UV-V 717/497/87/285.
Kitchen Cherry Wood cabinet doors from Schrock Cabinetry were coated the same technique as Example 8 except it was coated with base coat composition first, cured and followed with a topcoat described in TABLE-4. The coated wood were all cured under nitrogen with ultraviolet light measured at UV-A/UV-B/UV-C/UV-V 601/417/73/241 mJ.

Congoleum vinyl flooring tiles, 12" x 12" x 1/16" (thickness), in black (UPC 88699 50753 from Congoleum) was used directly without coating for Control Example 6.

**TABLE-5**

| | | Ex 11 | Ex 12 | C6 |
|---|---|---|---|---|
| A | Receding Contact Angle with Hexadecane | 51 | 29 | 9 |
| B | Gloss | 67 | 65 | 47 |
| C | Total Reflection | 4.91 | 5.08 | 5.41 |
| D | Appearance (Visual Test) | Black color is richer | Black color is richer | control |

The results indicate that the coating useful in this invention can improve optical effect compared with the Control 6 sample which already has high clarity due to the thin original coating.

### Examples 13-16 and Control Example C7

Coating composition was prepared the same way as Example 1 except using the materials described in TABLE-6. The overlay melamine paper was coated, cured and then made into laminate boards the same way as Example 1 except used white decorated paper also obtained from Coveright Surfaces.

For Control Example C7 a white color laminate board was made identically as Example 13-16 without use of any coating on the overlay paper before lamination.

| **TABLE-6** | | | | | | |
|---|---|---|---|---|---|---|
| | Coating Chemicals | Ex 13 | Ex 14 | Ex 15 | Ex 16 | C7 |
| A | gamma-glycidoxypropyltrimethoxysilane | --- | 65.33 | 83.20 | 74.13 | --- |
| B | CYRACURE™ UVI-6976 | 6.00 | 6.00 | 6.00 | 6.00 | --- |
| C | Limonene Monoxide | 9.50 | --- | 9.50 | 9.50 | --- |
| D | ERL-4221 | 83.20 | 8.37 | --- | 8.37 | --- |
| E | SILWET™ L-7220 | 0.30 | 0.30 | 0.30 | 1.00 | --- |
| F | PFPEBAPS | 1.00 | 1.00 | 1.00 | 0.00 | --- |
| G | Coating Weights | 6.7766 | 7.2602 | 4.5446 | 3.8998 | --- |

Comparison results of Example 13-16 and Control 3 are shown in TABLE-7:

| **TABLE**-**7** | | | | | | |
|---|---|---|---|---|---|---|
| | | Ex 13 | Ex 14 | Ex 15 | Ex 16 | C7 |
| A | Receding Contact Angle with Hexadecane | 14 | 47 | 37 | 51 | 14 |
| B | Gloss | 50 | 43 | 46 | 41 | 54 |
| C | SHARPIE™ Marker Removeability, scale of 1-5, 1 best | 4 | 1 | 2 | 1 | 5 |

### Examples 17-20

Coating compositions were prepared the same way as Example 1 except using the materials described in TABLE-8. The overlay melamine paper was coated, cured, and then made into laminate boards the same way as Example 1 except used white decorated paper also obtained from Coveright Surfaces. HFPO oligomer amidopropylsilane is a compound having the structure

CF₃CF₂CF₂-O-(CF(CF₃)CF₂O)_{6.8}-CF(CF₃)CONHCH₂CH₂CH₂Si(OCH₃₎₃

prepared from the reaction of HFPO oligomer methyl ester and aminopropyltrimethoxysilane. HFPO-oligomer based alcohol is a compound having the structure

CF₃CF_{Z}CF₂-O-(CF(CF₃)CF₂0)₆,$-CF(CF₃)CONHCHzCHzOH

prepared from the reaction of HFPO oligomer methyl ester and aminoethanol.

| **TABLE-8** | | | | | | |
|---|---|---|---|---|---|---|
| | Coating Chemicals | Ex 17 | Ex 18 | Ex 19 | Ex 20 | C7 |
| A | A-187 | 73.83 | 75.33 | 73.83 | 74.83 | --- |
| B | CYRACURE™ UVI-6976 | 6 | 6 | 6 | 6 | --- |
| C | Limonene Monoxide | 9.5 | 9.5 | 9.5 | 9.5 | --- |
| D | ERL-4221 | 8.37 | 8.37 | 8.37 | 8.37 | --- |
| E | SIL WET™ L-7220 | 0.3 | 0.3 | 0.3 | 0.3 | --- |
| F | HFPO oligomer amidopropylsilane | 2 | --- | --- | --- | --- |
| G | PFPEBAPS | --- | 0.5 | --- | --- | --- |
| H | HFPO-oligomer based alcohol | --- | --- | 2 | --- | --- |
| | Copolymer from HFPO oligomer methracrylate A, silane-containing acrylate | | | | | |
| | (A-174) a silane-containing acrylate from OSi Specialties, Inc and | | | | | |
| I | methylmethracrylate | --- | --- | --- | 1 | --- |
| J | Coating Weights | 8.49 | 10.15 | 9.20 | 8.26 | --- |

| | Properties | | | | | |
|---|---|---|---|---|---|---|
| K | Receding Contact Angle, C16H34 | 46 | 53 | 41 | 36 | 14 |
| L | Gloss | 50 | 42 | 52 | 45 | 54 |
| M | SHARPIE™ Marker Removeability | 2 | 1 | 2 | 1 | 5 |

The easy-cleaning and low surface energy properties can be achieved by using different fluorochemicals.

### Example 21

Laminate samples from Example 18 and Control Example C7 were subjected to a durability test to cleaning according to the following procedures:

Gardener Abrasion Cleaning Test: Laminate boards were abraded using Gardener Abrader by rubbing the tested surface with dampened sponge with 5% of DAWN™ dish soap solution. Contact angles and marker removal properties were monitored after abraded for 50, 100, 500, 1000, and 3000 cycles. At each measurement the laminate sample was removed from abrader, cleaned with water, then isopropyl alcohol and allowed to dry for an hour, and the receding hexadecane contact angle was measured, marker resistance tested over the abraded area. The results are summarized in TABLE-9.

| **TABLE-9** | | | | | | | |
|---|---|---|---|---|---|---|---|
| **Properties** | | Initial | 50 Cycles | 100 Cycles | 500 Cycles | 1000 Cycles | 3000 Cycles |
| | Ex 21 | 55 | 53 | 54 | 53 | 54 | 56 |
| **Rec. Contact Angle, C16H34** | C8 | 10 | 8 | 10 | 9 | 9 | 9 |
| | Ex 21 | 1 | 1 | 1 | 1 | 1 | 1 |
| **Sharpie Marker Removal** | C8 | 5 | 5 | 5 | 5 | 5 | 5 |

The excellent SHARPIE™ Marker removal result and high contact angle retention after 3000 tested cycles indicated the coating is very durable to the cleaning with abrasion.

### Examples 22 and 23 and Control Examples C8 and C9

Overlay paper was gravure coated by taping a sheet overlay paper onto a PET film and coated from the bottom side of the overlay paper with the identical composition as Example 17 at a line speed of 130 ft/min. A knurled quad cell pattern with a nominal 0.5 mil wet caliper volume factor was used with a 0.25 - 0.5 in footprint to give a coating weight of 10.72 g/m² after curing.

Example 22 laminate was made the same way as Example 1 using black decorated paper for the reflectance evaluation and Example 23 used the white decorated paper for the purpose of anti-soiling evaluation.

Control Examples C8 and C9 were made the same way as Example 22 with the same overlay without coating. Control Example C8 laminate used black decorated paper for comparison evaluation with Example 22 and Control Example C9 used the white decorated paper for the comparison evaluation purpose with Example 23.

| **TABLE-10** | | | | | |
|---|---|---|---|---|---|
| | Properties | Ex 22 | C8 | Ex 23 | C9 |
| A | Deco Paper | Black | Black | White | White |
| B | Receding Contact Angle with Hexadecane | 57 | 14 | 57 | 14 |
| C | Gloss | 53 | 54 | 53 | 54 |
| D | Total Reflection | 6.64 | 8.39 | --- | --- |
| E | SHARPIE™ Marker Removeability | 1 | 5 | 1 | 5 |
| F | Appearance | color richer than C8 | std. | --- | --- |

### Examples 24 and 25 and Control Example C10

For Example 24 MOHAWK™ Laminate Flooring, 5"x 5" x 5/16" (thickness), simulated red wood with cherry stain color (UPC 636738055618) was coated with the same composition in Example 1.

For Example 25 MOHAWK™ Laminate Flooring, 5"x5"x5/16' (thickness), simulated red wood with cherry stain color (UPC 636738055618) was coated with SARTOMER™ SR-306 containing 1% of DAROCUR™ 1173 and 1% of HFPO oligomer methacrylate A exactly the same technique as in Example 11.

Control Example C10 laminate was as obtained from Mohawk without any additional coating.

| **TABLE-11** | | | | |
|---|---|---|---|---|
| | | Ex 24 | Ex 25 | C10 |
| | Receding Contact Angle with | | | |
| A | Hexadecane | 50 | 59 | 9 |
| B | Appearance (Visual Test) | "wood" grains are significantly clearer than control C10 | "wood" grains are significantly clearer than control C10 | Control (typical cloudy look) |

### Examples 26-27 and Control Example C11

Coating compositions were prepared similarly as Example 1 and the weight percentages are tabulated in Table-12. Each material (0.6 grams) was coated on a 4"x4" engineering stone tile made by Santa Regina International, Ltd. Palmer, TX.

For Control Example C11, a stone tile was made the same way as Example 26 without any fluorochemical silane.

| **TABLE-12** | | | | |
|---|---|---|---|---|
| | Coating Materials, % | Ex 26 | Ex 27 | C-11 |
| A | gamma-glycidoxypropyltrimethoxysilane | 72.33 | 71.83 | 72.83 |
| B | CYRACURE™ UVI-6976 | 9.00 | 6.00 | 6.00 |
| C | Limonene Monoxide | 4.00 | 4.00 | 4.00 |
| D | ERL-4229 | 13.87 | 13.87 | 13.87 |
| E | SIL WET™ L-7220 | 0.30 | 0.30 | 0.30 |
| F | PFPEBAPS | 0.50 | 0.00 | 0.00 |
| G | HFPO oligomer amidopropylsilane | 0.00 | 1.00 | 0.00 |

Comparison results of Example 26-27 and Control 11 are shown in TABLE-13:

| | **TABLE-13** | | | |
|---|---|---|---|---|
| | | Ex 26 | Ex 27 | C11 |
| A | Receding Contact Angle with Hexadecane: | 36 | 34 | 8 |
| B | SHARPIE™ Marker Removeability, scale of 1~5, 1 best | 1 | 1 | 5 |
| C | Water Repellency | excellent | excellent | none |

### Soiling Testing

Laminate boards from Example 23 and Control Example C9 were evaluated using ASTM D 3206 Test Method with synthetic soils. After 300 soiling cycles, the color of the soiled samples, after wiping, were measured with a MINOLTA™ Color Meter. Example 23 had a delta E value of 1.57 and Control Example C9 had a delta E value of 6.38. This result indicates the laminate floor made from this invention has a very significant higher soil-resistance than the control sample without using this invention.

### Refractive Indices

Refractive indices of films from various compositions used in the above Examples were measured using Prism Coupler from Metricon Co. of Pennington, New Jersey. Polymer film from Examples 5, 6, 7, and 11 has a refractive index n_{d} of 1.4971. Polymeric coatings used in Examples 14, 15 and 16 have n_{d} of 1.4979,1.4877, and 1.4973. The reported refractive index of melamine-formaldehyde polymer is at around 1.68 (Physical review E, Vol. 59 No. 2, Feb, 1999).

It is desirable to have a lower refractive index polymer as the outmost coating layer of the protected substrate described herein for reducing the white-burring and increasing clarity of background.

Various modifications and alterations to this invention will become apparent to those skilled in the art without departing from the scope and spirit of this invention. It should be understood that this invention is not intended to be unduly limited by the illustrative embodiments and examples set forth herein and that such examples and embodiments are presented by way of example only with the scope of the invention intended to be limited only by the claims set forth herein as follows.

## Claims

1. A decorative laminate which is either:
(a) a decorative laminate comprising:
a decorative layer comprising melamine resin,
a protective overlayer comprising a protective coating composition atop the decorative layer, wherein the protective coating composition comprises the reaction product of:
(a) at least 50% by weight of a first component comprising one or more epoxy-terminated silane compounds,
(b) a second component comprising one or more fluorochemical silane compounds, and
(c) cationic photoinitiator;
or
(b) a decorative laminate comprising:
a decorative layer,
a wear layer atop the decorative layer, wherein the wear layer comprises melamine resin, and
a protective overlayer comprising a protective coating composition atop the wear layer, wherein the protective coating composition comprises the reaction product of:
(a) at least 50% by weight of a first component comprising one or more epoxy-terminated silane compounds,
(b) a second component comprising one or more fluorochemical silane compounds, and
(c) cationic photoinitiator.

2. The decorative laminate of claim 1, wherein the decorative laminate comprises:
a decorative layer comprising melamine resin and
a protective overlayer comprising a protective coating composition atop the decorative layer, wherein the protective coating composition comprises the reaction product of:
(a) at least 50% by weight of a first component comprising one or more epoxy-terminated silane compounds,
(b) a second component comprising one or more fluorochemical silane compounds, and
(c) cationic photoinitiator.

3. The decorative laminate of claim 1, wherein the decorative laminate comprises:
a decorative layer,
a wear layer atop the decorative layer, wherein the wear layer comprises melamine resin,
and
a protective overlayer comprising a protective coating composition atop the wear layer,
wherein the protective coating composition comprises the reaction product of:
(a) at least 50% by weight of a first component comprising one or more epoxy-terminated silane compounds,
(b) a second component comprising one or more fluorochemical silane compounds, and
(c) cationic photoinitiator.

4. The decorative laminate of claim 2 wherein there is a visible reduction in reflectance off the protective layer as compared to the decorative layer.

5. The decorative laminate of claim 3 wherein there is a visible reduction in reflectance off the protective layer as compared to the wear layer.

6. The decorative laminate of any of claims 1 to 5 wherein the protective coating composition comprises the reaction product of (a), (b), (c), and (d) one or more diepoxide compounds.

7. The decorative laminate of any of claims 1 to 6 wherein the epoxy-terminated silane compounds have the formula 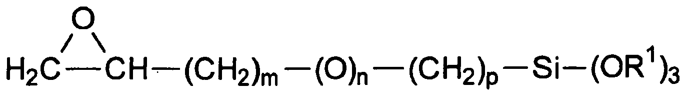 wherein
m is 1 to 6,
n is 0 or 1,
p is 1 to 6, and
R¹ is H or alkyl of 1 to 10 carbon atoms.

8. The decorative laminate of claim 7 wherein the first component comprises gamma-glycidoxypropyltrimethoxysilane.

9. The decorative laminate of any of claims 1 to 8 wherein the second component comprises one or more perfluorinated polyether silanes or one or more perfluorinated ether-containing alcohols.

10. The decorative laminate of any of claims 1 to 9 wherein the second component comprises from about 0.01% to about 10% by weight of the composition.

11. A method for making a decorative laminate of claim 1(a) comprising:
providing a decorative article comprising a decorative layer comprising melamine resin;
coating a protective coating composition on the decorative layer, wherein the protective coating composition comprises:
a first component comprising one or more epoxy-terminated silane compounds;
a second component comprising one or more fluorochemical silane compounds;
and
cationic photoinitiator;
wherein the first component comprises at least about 50% by weight of the composition;
curing the protective coating composition using ultraviolet light; and
laminating the decorative article using heat and pressure.

12. A method for making a decorative laminate of claim 1(b) comprising:
providing a decorative article comprising (i) a decorative layer and (ii) a wear layer comprising melamine resin atop the decorative layer;
coating a protective coating composition on the wear layer, wherein the protective coating composition comprises:
a first component comprising one or more epoxy-terminated silane compounds;
a second component comprising one or more fluorochemical silane compounds; and
cationic photoinitiator;
wherein the first component comprises at least about 50% by weight of the
composition;
curing the protective coating composition using ultraviolet light; and
laminating the decorative article using heat and pressure.

13. The method of claim 11 or claim 12 wherein the decorative article further comprises a core layer and a stabilizing layer beneath the decorative layer.

## Patentansprüche

1. Dekoratives Laminat, das entweder:
(a) ein dekoratives Laminat ist, umfassend:
eine dekorative Schicht, umfassend Melaminharz,
einen Schutzüberzug, umfassend eine Schutzbeschichtungs-Zusammensetzung auf der dekorativen Schicht, wobei die Schutzbeschichtungs-Zusammensetzung das Reaktionsprodukt aus Folgendem umfasst:
(a) mindestens 50 Gew.-% eines ersten Bestandteils, umfassend eine oder mehrere epoxidterminierte Silanverbindungen,
(b) einen zweiten Bestandteil, umfassend eine oder mehrere fluorchemische Silanverbindungen, und
(c) einen kationischen Photoinitiator,
oder
(b) ein dekoratives Laminat ist, umfassend:
eine dekorative Schicht,
eine Verschleißschicht auf der dekorativen Schicht, wobei die Verschleißschicht Melaminharz umfasst, und
einen Schutzüberzug, umfassend eine Schutzbeschichtungs-Zusammensetzung auf der Verschleißschicht, wobei die Schutzbeschichtungs-Zusammensetzung das Reaktionsprodukt aus Folgendem umfasst:
(a) mindestens 50 Gew.-% eines ersten Bestandteils, umfassend eine oder mehrere epoxidterminierte Silanverbindungen,
(b) einen zweiten Bestandteil, umfassend eine oder mehrere fluorchemische Silanverbindungen, und
(c) einen kationischen Photoinitiator,

2. Dekoratives Laminat nach Anspruch 1, wobei das dekorative Laminat Folgendes umfasst:
eine dekorative Schicht, umfassend Melaminharz, und
einen Schutzüberzug, umfassend eine Schutzbeschichtungs-Zusammensetzung auf der dekorativen Schicht, wobei die Schutzbeschichtungs-Zusammensetzung das Reaktionsprodukt aus Folgendem umfasst:
(a) mindestens 50 Gew.-% eines ersten Bestandteils, umfassend eine oder mehrere epoxidterminierte Silanverbindungen,
(b) einen zweiten Bestandteil, umfassend eine oder mehrere fluorchemische Silanverbindungen, und
(c) einen kationischen Photoinitiator,

3. Dekoratives Laminat nach Anspruch 1, wobei das dekorative Laminat Folgendes umfasst:
eine dekorative Schicht,
eine Verschleißschicht auf der dekorativen Schicht, wobei die Verschleißschicht Melaminharz umfasst, und
einen Schutzüberzug, umfassend eine Schutzbeschichtungs-Zusammensetzung auf der Verschleißschicht, wobei die Schutzbeschichtungs-Zusammensetzung das Reaktionsprodukt aus Folgendem umfasst:
(a) mindestens 50 Gew.-% eines ersten Bestandteils, umfassend eine oder mehrere epoxidterminierte Silanverbindungen,
(b) einen zweiten Bestandteil, umfassend eine oder mehrere fluorchemische Silanverbindungen, und
(c) einen kationischen Photoinitiator,

4. Dekoratives Laminat nach Anspruch 2, wobei eine sichtbare Reduzierung des Reflexionsvermögens von der Schutzschicht im Vergleich zur dekorativen Schicht vorliegt.

5. Dekoratives Laminat nach Anspruch 3, wobei eine sichtbare Reduzierung des Reflexionsvermögens von der Schutzschicht im Vergleich zur Verschleißschicht vorliegt.

6. Dekoratives Laminat nach einem der Ansprüche 1 bis 5, wobei die Schutzbeschichtungs-Zusammensetzung das Reaktionsprodukt aus (a), (b), (c) und (d) eine oder mehrere Diepoxidverbindungen umfasst.

7. Dekoratives Laminat nach einem der Ansprüche 1 bis 6 wobei die epoxidterminierten Silanverbindungen die folgende Formel aufweisen: 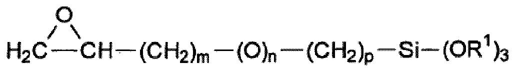 wobei
m gleich 1 bis 6 ist,
n gleich 0 oder 1 ist,
p gleich 1 bis 6 ist und
R¹ gleich H oder Alkyl mit 1 bis 10 Kohlenstoffatomen ist.

8. Dekoratives Laminat nach Anspruch 7, wobei der erste Bestandteil gamma-Glycidoxypropyltrimethoxysilan umfasst.

9. Dekoratives Laminat nach einem der Ansprüche 1 bis 8, wobei der zweite Bestandteil ein oder mehrere perfluorierte Polyethersilane oder ein oder mehrere perfluorierte Ether enthaltende Alkohole umfasst.

10. Dekoratives Laminat nach einem der Ansprüche 1 bis ,9 wobei der zweite Bestandteil ungefähr 0,01 Gew.-% bis ungefähr 10 Gew.-% der Zusammensetzung umfasst.

11. Verfahren zur Herstellung eines dekorativen Laminats nach Anspruch 1(a), umfassend:
Bereitstellen eines dekorativen Artikels, umfassend eine dekorative Schicht, die Melaminharz umfasst,
Beschichten der dekorativen Schicht mit einer Schutzbeschichtungs-Zusammensetzung, wobei die Schutzbeschichtungs-Zusammensetzung Folgendes umfasst:
einen ersten Bestandteil, umfassend eine oder mehrere epoxidterminierte Silanverbindungen
einen zweiten Bestandteil, umfassend eine oder mehrere fluorchemische Silanverbindungen, und
einen kationischen Photoinitiator,
wobei der erste Bestandteil mindestens ungefähr 50 Gew.-% der Zusammensetzung umfasst,
Aushärten der Schutzbeschichtungs-Zusammensetzung unter Verwendung von ultraviolettem Licht und
Laminieren des dekorativen Artikels unter Verwendung von Hitze und Druck.

12. Verfahren zur Herstellung eines dekorativen Laminats nach Anspruch 1(b), umfassend:
Bereitstellen eines dekorativen Artikels, umfassend.(I) eine dekorative Schicht und (II) eine Verschleißschicht, die mit Melaminharz auf der dekorativen Schicht umfasst,
Beschichten der Verschleißschicht mit einer Schutzbeschichtungs-Zusammensetzung, wobei die Schutzbeschichtungs-Zusammensetzung Folgendes umfasst:
einen ersten Bestandteil, umfassend eine oder mehrere epoxidterminierte Silanverbindungen,
einen zweiten Bestandteil, umfassend eine oder mehrere fluorchemische Silanverbindungen, und
einen kationischen Photoinitiator,
wobei der erste Bestandteil mindestens ungefähr 50 Gew.-% der Zusammensetzung umfasst,
Aushärten der Schutzbeschichtungs-Zusammensetzung unter Verwendung von ultraviolettem Licht und
Laminieren des dekorativen Artikels unter Verwendung von Hitze und Druck.

13. Verfahren nach Anspruch 11 oder Anspruch 12, wobei der dekorative Artikel ferner eine Kernschicht und eine stabilisierende Schicht unter der dekorativen Schicht umfasst.

## Revendications

1. Stratifié décoratif qui est ou :
(a) un stratifié décoratif comprenant :
une couche décorative comprenant une résine de mélamine,
une surcouche protectrice comprenant une composition de revêtement protecteur au-dessus de la couche décorative, dans lequel la composition de revêtement protecteur comprend le produit de réaction de :
(a) au moins 50 % en poids d'un premier composant comprenant un ou plusieurs composés silane à terminaison époxy,
(b) un deuxième composant comprenant un ou plusieurs composés fluorochimiques silane, et
(c) un photo-inducteur cationique ;
ou
(b) un stratifié décoratif comprenant :
une couche décorative,
une couche d'usure au-dessus de la couche décorative, dans lequel la couche d'usure comprend une résine de mélamine, et
une surcouche protectrice comprenant une composition de revêtement protecteur au-dessus de la couche d'usure, dans lequel la composition de revêtement protecteur comprend le produit de réaction de :
(a) au moins 50 % en poids d'un premier composant comprenant un ou plusieurs composés silane à terminaison époxy,
(b) un deuxième composant comprenant un ou plusieurs composés fluorochimiques silane, et
(c) un photo-inducteur cationique ;

2. Stratifié décoratif selon la revendication 1, où le stratifié décoratif comprend :
une couche décorative comprenant une résine de mélamine et
une surcouche protectrice comprenant une composition de revêtement protecteur au-dessus de la couche décorative, dans lequel la composition de revêtement protecteur comprend le produit de réaction de :
(a) au moins 50 % en poids d'un premier composant comprenant un ou plusieurs composés silane à terminaison époxy,
(b) un deuxième composant comprenant un ou plusieurs composés fluorochimiques silane, et
(c) un photo-inducteur cationique ;

3. Stratifié décoratif selon la revendication 1, où le stratifié décoratif comprend :
une couche décorative,
une couche d'usure au-dessus de la couche décorative, dans lequel la couche d'usure comprend une résine de mélamine, et
une surcouche protectrice comprenant une composition de revêtement protecteur au-dessus de la couche d'usure, dans lequel la composition de revêtement protecteur comprend le produit de réaction de :
(a) au moins 50 % en poids d'un premier composant comprenant un ou plusieurs composés silane à terminaison époxy,
(b) un deuxième composant comprenant un ou plusieurs composés fluorochimiques silane, et
(c) un photo-inducteur cationique ;

4. Stratifié décoratif selon la revendication 2, dans lequel il y a une réduction visible de réflectance par la couche de protection par comparaison avec la couche décorative.

5. Stratifié décoratif selon la revendication 3, dans lequel il y a une réduction visible de réflectance par la couche de protection par comparaison avec la couche d'usure.

6. Stratifié décoratif selon l'une quelconque des revendications 1 à 5, dans lequel la composition de revêtement protecteur comprend le produit de réaction de (a), (b), (c), et (d) un ou plusieurs composés diépoxyde.

7. Stratifié décoratif selon l'une quelconque des revendications 1 à 6, dans lequel les composés silane à terminaison époxy sont de formule 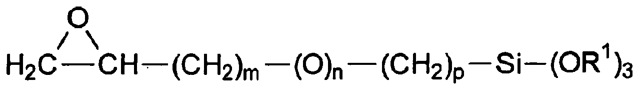 dans laquelle
m va de 1 à 6,
n vaut 0 ou 1,
p va de 1 à 6, et
R¹ est H ou un alkyle de 1 à 10 atomes de carbone.

8. Stratifié décoratif selon la revendication 7, dans lequel le premier composant comprend du gamma-glycidoxypropyltriméthoxysilane.

9. Stratifié décoratif selon l'une quelconque des revendications 1 à 8, dans lequel le deuxième composant comprend un ou plusieurs polyéther silanes perfluorés ou un ou plusieurs alcools contenant un éther perfluoré.

10. Stratifié décoratif selon l'une quelconque des revendications 1 à 9, dans lequel le deuxième composant constitue d'environ 0,01 % à environ 10 % en poids de la composition.

11. Procédé pour fabriquer un stratifié décoratif selon la revendication 1(a), comprenant :
la fourniture d'un article décoratif comprenant une couche décorative comprenant une résine de mélamine ; le revêtement d'une composition de revêtement protecteur sur la couche décorative, dans lequel la composition de revêtement protecteur comprend :
un premier composant comprenant un ou plusieurs composés silane à terminaison époxy ;
un deuxième composant comprenant un ou plusieurs composés fluorochimiques silane ; et
un photo-inducteur cationique ;
dans lequel le premier composant constitue au moins environ 50 % en poids de la composition ;
le durcissement de la composition de revêtement protecteur en utilisant de la lumière ultraviolette ; et
la stratification de l'article décoratif en utilisant de la chaleur et de la pression.

12. Procédé pour fabriquer un stratifié décoratif selon la revendication 1(b), comprenant :
la fourniture d'un article décoratif comprenant (i) une couche décorative et (ii) une couche d'usure comprenant une résine de mélamine au-dessus de la couche décorative ;
le revêtement d'une composition de revêtement protecteur sur la couche d'usure, dans lequel la composition de revêtement protecteur comprend :
un premier composant comprenant un ou plusieurs composés silane à terminaison époxy ;
un deuxième composant comprenant un ou plusieurs composés fluorochimiques silane ; et
un photo-inducteur cationique ;
dans lequel le premier composant constitue au moins environ 50 % en poids de la composition ;
le durcissement de la composition de revêtement protecteur en utilisant de la lumière ultraviolette ; et
la stratification de l'article décoratif en utilisant de la chaleur et de la pression.

13. Procédé selon la revendication 11 ou la revendication 12, dans lequel l'article décoratif comprend en outre une couche d'âme et une couche de stabilisation en dessous de la couche décorative.
